# EUROPEAN PATENT APPLICATION

(11) **EP 3 805 580 A1**
(43) Date of publication of application: **14.04.2021**
(21) Application number: 19803547.9
(22) Date of filing: 08.04.2019
(51) Int. Cl.: F16B 37/04, F16B 37/00

(54) **RESIN COMPONENT**

(30) Priority: 14.05.2018 JP 2018093094; 22.08.2018 JP 2018155437
(71) Applicant: Toyoda Iron Works Co., Ltd., Toyota-shi, Aichi 471-8507 (JP)
(72) Inventor: YOSHIDA Kenichi, Toyota-shi, Aichi 471-8507 (JP)
(74) Representative: Patentanwälte Bals & Vogel
(86) International application number: PCT/JP2019/015276
(87) International publication number: WO 2019/220812

(57) **Abstract**

An internal thread member (30) of a resin component (20) is used to fasten and fix a member-to-be-fastened-and-fixed (21) made of a metallic material. The internal thread member (30) is attached to a component body (50) made of a synthetic resin. The internal thread member (30) includes a thread main body (33) made of a synthetic resin and a nut portion (32) made of a metallic material. The nut portion (32) is integrated with the thread main body (33) in a state in which an end face (32A) of the nut portion (32) on one side in the fastening direction of the internal thread (31) is exposed. The end face of the nut portion (32) is exposed to the outside in a state in which the protruding amount of the end face (32A) of the nut portion (32) from the outer surface of the component body (50) is greater than or equal to zero.

## Description

### TECHNICAL FIELD

The present disclosure relates to a resin component that includes an internal thread member used to fix a member-to-be-fastened-and-fixed.

### BACKGROUND ART

An attachment structure has been developed that attaches a fastening-fixing internal thread member to a fixation object member (for example, Patent Document 1). A member-to-be-fastened-and-fixed is fixed to the fixation object member with a fastening-fixing bolt. The attachment structure of Patent Document 1 includes an accommodating member made of a synthetic resin. The accommodating member accommodates a nut. The accommodating member is attached to the back of the fixation object member (for example, a door panel for an automobile) without causing the member-to-be-fastened-and-fixed (speaker) to contact the nut. In Patent Document 1, the fastening-fixing bolt is threaded into the nut with the outer peripheral portion of the speaker held between the accommodating member and the bolt (specifically, the head of the bolt). Accordingly, the speaker (the member-to-be-fastened-and-fixed) is fastened and fixed to the automobile door panel (fixation object member).

The internal thread member of Patent Document 1 includes an accommodating member made of a synthetic resin and a metal nut accommodated in the accommodating member. The internal thread member is attached to the back of the automobile door panel. The fastening-fixing bolt is threaded into the nut with the outer peripheral portion of the speaker held between the internal thread member and the bolt (specifically, the head of the bolt). Accordingly, the speaker is fastened and fixed to the door panel.

### PRIOR ART DOCUMENT

### Patent Document

Patent Document 1: Japanese Laid-Open Patent Publication No. 2012-52599

### SUMMARY OF THE INVENTION

### Problems that the Invention is to Solve

In order to build a firm fixation structure through a fastening-fixing operation using an internal thread member (for example, a nut), metal-to-metal contact is preferably established between portions that are fastened and fixed to each other.

In a case in which a member-to-be-fastened-and-fixed is fixed to a synthetic resin component, it is difficult to establish metal-to-metal contact between portions that are fastened and fixed to each other. The attachment structure of Patent Document 1 may be employed to attach a nut to a resin component. In such a case, an accommodating member made of a synthetic resin is disposed between the nut and the member-to-be-fastened-and-fixed in the attachment structure. Thus, metal-to-metal contact is not established between the portions that are fastened and fixed to each other.

In a case in which the above-described internal thread member is used with a resin component, it is typical that the internal thread member will be replaced during repair of the resin component and that the internal thread member including a metal component (nut) will be removed from the fixation object member when the resin component is recycled. The above-described internal thread member is fixed to the back of the fixation object member (door panel), to which the internal thread member is fixed. Therefore, if the structure of the fixation object member or the structure surrounding the fixation object member is complicated, the internal thread member may be difficult to attach to or remove from the fixation object member.

Accordingly, it is an objective of the present disclosure to provide a resin component that achieves fastening and fixing of a member-to-be-fastened-and-fixed while establishing metal-to-metal contact.

Also, it is an objective of the present disclosure to provide a resin component that allows an internal thread member to be easily attached and removed to and from the resin component.

### Means for Solving the Problems

In accordance with one aspect of the present disclosure, a resin component is provided that includes an internal thread member configured to be used to fasten and fix a member-to-be-fastened-and-fixed made of a metallic material, and a component body made of a synthetic resin, the internal thread member being attached to the component body. The internal thread member includes a thread main body made of a synthetic resin, and a nut portion made of a metallic material. The nut portion includes an internal thread. The nut portion is integrated with the thread main body in a state in which an end face of the nut portion on one side in a fastening direction of the internal thread is exposed. The end face of the nut portion is exposed to an outside in a state in which a protruding amount of the end face of the nut portion from an outer surface of the component body is greater than or equal to zero.

With the above-described configuration, the end face of the nut portion (metallic material) of the internal thread member is exposed to the outside of the resin component. Thus, when the member-to-be-fastened-and-fixed is fastened and fixed to the resin component, the member-to-be-fastened-and-fixed and the end face of the nut portion are brought into contact with each other by arranging the member-to-be-fastened-and-fixed at a proper position. Thus, when the member-to-be-fastened-and-fixed is fastened and fixed to the resin component using the internal thread member (specifically, the internal thread of the internal thread member) in this contacting state, the member-to-be-fastened-and-fixed is fastened and fixed to the resin component with the member-to-be-fastened-and-fixed and the end face of the nut portion contacting each other (in a metal-to-metal contact state).

In accordance with another aspect of the present disclosure, a resin component is provided that includes an internal thread member including an internal thread used to fix a member-to-be-fastened-and-fixed, and a component body made of a synthetic resin, the component body having an attachment hole into which the internal thread member is inserted. An engagement groove is provided in one of an inner circumferential surface of the attachment hole and an outer circumferential surface of the internal thread member. An engagement protrusion is provided on the other one of the inner circumferential surface of the attachment hole and the outer circumferential surface of the internal thread member. The engagement groove extends in a peripheral direction of the internal thread member. The engagement groove and the engagement protrusion are engaged with each other. The component body includes a first fixation surface on a side on which the member-to-be-fastened-and-fixed is fixed. The first fixation surface includes a guiding protrusion and a fitting recess. The internal thread member includes an engagement arm having a cantilever-like structure. The engagement arm extends in the peripheral direction. The engagement arm is configured to be elastically deformed such that a free end of the engagement arm swings. The engagement arm includes a fitting protrusion. The fitting protrusion is provided on a surface facing the component body in a section of the engagement arm that corresponds to the free end. The guiding protrusion of the component body and the fitting protrusion of the engagement arm are arranged side-by-side in the peripheral direction. The fitting protrusion of the engagement arm and the fitting recess of the component body are opposed to each other in the fastening direction of the internal thread. The internal thread member includes a second fixation surface on a side on which the member-to-be-fastened-and-fixed is fixed. A section of the engagement arm protrudes further than the first fixation surface and the second fixation surface.

With the above-described configuration, the internal thread member is inserted into the attachment hole of the component body toward the surface of the component body on the side to which the member-to-be-fastened-and-fixed is fixed (the first fixation surface). Accordingly, the component body and the internal thread member are rotated relative to each other such that the engagement groove, which is provided in one of the component body and the internal thread member and extends in the peripheral direction (circumferential direction), receives the engagement protrusion, which is provided on the other one of the component body and the internal thread member. This operation restricts movement in the fastening direction of the internal thread member relative to the component body. Further, when the fitting protrusion of the engagement arm abuts the guiding protrusion of the component body during the relative rotation between the component body and the internal thread member, the engagement arm is elastically deformed. This allows the fitting protrusion of the engagement arm to pass while avoiding the section of the component body in which the guiding protrusion is disposed. As a result, the fitting protrusion and the guiding protrusion are arranged side-by-side in the peripheral direction. The direction in which the internal thread member is rotated when attached to the component body is referred to an attachment direction. The rotation direction opposite to the attachment direction is referred to a removal direction. The above-described engagement between the fitting protrusion of the engagement arm and the guiding protrusion of the component body restricts rotation of the internal thread member in the removal direction. The above-described configuration facilitates attachment of the internal thread member to the component body from the side facing the first fixation surface, that is, from the section in which the space for fixing the member-to-be-fastened-and-fixed is secured.

Further, when the internal thread member is removed from the component body, the engagement arm is elastically deformed such that the fitting protrusion of the engagement arm and the guiding protrusion of the component body are no longer arranged side-by-side in the peripheral direction. Such a simple operation allows the internal thread member to be rotated in the removal direction. The internal thread member is removed from the component body by rotating the internal thread member in the removal direction in a state in which the engagement protrusion and the guiding protrusion are not arranged side-by-side in the peripheral direction.

With the above-described configuration, when the member-to-be-fastened-and-fixed is fixed to the resin component using the internal thread of the internal thread member, the member-to-be-fastened-and-fixed pushes the engagement arm of the internal thread member toward the first fixation surface of the component body. This causes the fitting protrusion of the engagement arm to be fitted into the fitting recess of the component body. The fitting of the fitting protrusion into the fitting recess restricts rotation in the removal direction of the internal thread member relative to the component body. Therefore, in this structure, the internal thread member is not easily removed.

### Effects of the Invention

The present disclosure achieves fastening and fixing of a member-to-be-fastened-and-fixed in a metal-to-metal contact state.

The present disclosure also facilitates attachment and removal of the internal thread member.

### BRIEF DESCRIPTION OF THE DRAWINGS

Fig. 1 is a perspective view of a structure including an insert nut in a radiator support according to a first embodiment of the present disclosure.
Fig. 2 is an exploded perspective view of the structure including the insert nut in the radiator support of Fig. 1.
Fig. 3 is a cross-sectional view taken along line 3-3 in Fig. 1, illustrating the radiator support.
Fig. 4 is a plan view of the insert nut.
Fig. 5 is a side view of the insert nut as viewed in a direction of arrow 5 in Fig. 4.
Fig. 6 is a bottom view of the insert nut as viewed in a direction of arrow 6 in Fig. 5.
Fig. 7 is a plan view of a structure including an attachment hole in a component body.
Fig. 8 is a cross-sectional view taken along line 8-8 in Fig. 7, illustrating the component body.
Fig. 9 is a bottom view of the component body as viewed in a direction of arrow 9 in Fig. 8.
Fig. 10 is a partial cross-sectional view of the radiator support before the insert nut is inserted.
Fig. 11 is a partial cross-sectional view of the radiator support after the insert nut is inserted.
Fig. 12 is a plan view of the radiator support when the insert nut is inserted.
Fig. 13A is a partial cross-sectional view of the radiator support.
Fig. 13B is a cross-sectional view taken along line 13B-13B in Fig. 13A.
Fig. 14A is a partial cross-sectional view of the radiator support.
Fig. 14B is a cross-sectional view taken along line 14B-14B in Fig. 14A.
Fig. 15 is a cross-sectional view illustrating an example of an operation of a ratchet mechanism.
Fig. 16 is a cross-sectional view of the radiator support in a state in which a frame member fixed to the radiator support.
Fig. 17 is a cross-sectional view illustrating an example of an operation of the ratchet mechanism in a state in which the frame member is fixed.
Fig. 18 is a cross-sectional view illustrating an example of a removal tool.
Fig. 19 is an exploded perspective view of a structure including an insert nut in a radiator support according to a second embodiment of the present disclosure.
Fig. 20 is a perspective view of a structure including the insert nut in the radiator support of Fig. 19.
Fig. 21 is a cross-sectional view taken along line 21-21 in Fig. 20, illustrating the radiator support.
Fig. 22 is a plan view of the insert nut.
Fig. 23 is a side view of the insert nut as viewed in a direction of arrow 23 in Fig. 22.
Fig. 24 is a bottom view of the insert nut as viewed in a direction of arrow 24 in Fig. 23.
Fig. 25 is a plan view of a structure including an attachment hole in a component body.
Fig. 26 is a cross-sectional view taken along line 26-26 in Fig. 25, illustrating the component body.
Fig. 27 is a bottom view of the component body as viewed in a direction of arrow 27 in Fig. 26.
Fig. 28 is a partial cross-sectional view of the radiator support before the insert nut is inserted.
Fig. 29 is a partial cross-sectional view of the radiator support after the insert nut is inserted.
Fig. 30 is a plan view of the radiator support when the insert nut is inserted.
Fig. 31A is a partial cross-sectional view of the radiator support.
Fig. 31B is a cross-sectional view taken along line 31B-31B in Fig. 31A.
Fig. 32 is a partial cross-sectional view of a structure including an engagement arm of the insert nut before rotation.
Fig. 33 is a partial cross-sectional view of the structure including the engagement arm of the insert nut during rotation.
Fig. 34 is a partial cross-sectional view of the structure including the engagement arm of the insert nut after rotation.
Fig. 35 is a plan view of the insert nut in a removal operation state.
Fig. 36 is a partial cross-sectional view of a structure including an engagement arm of an insert nut after rotation.
Fig. 37 is a partial cross-sectional view of the radiator support in a state in which a frame member fixed to the radiator support.

### MODES FOR CARRYING OUT THE INVENTION

A resin component according to a first embodiment of the present disclosure will now described.

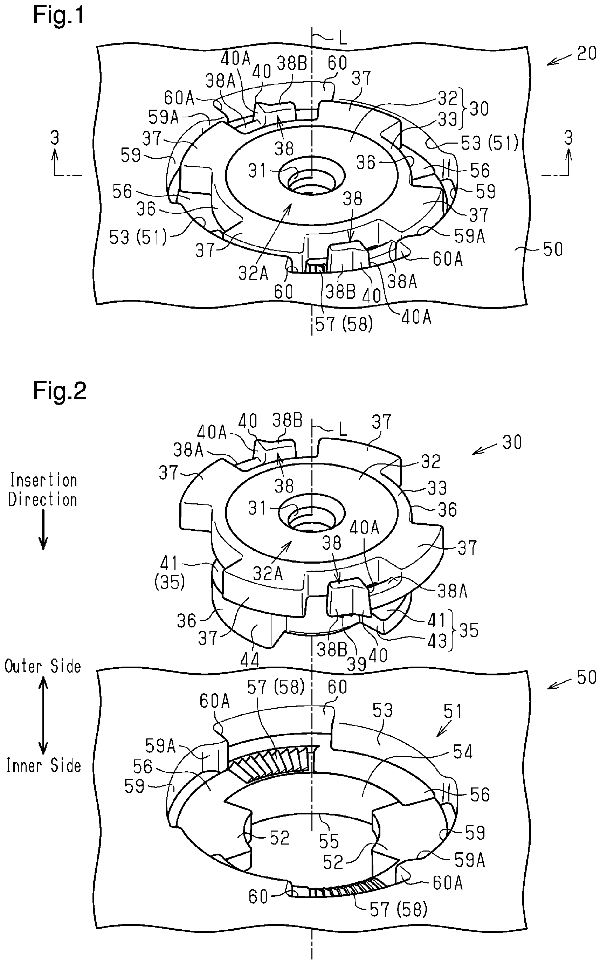

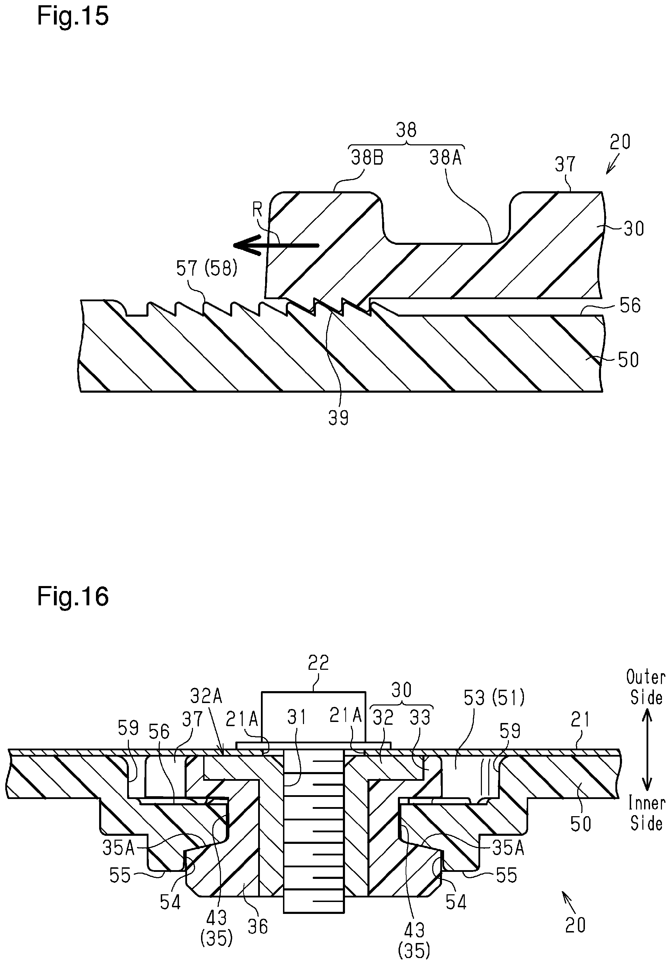

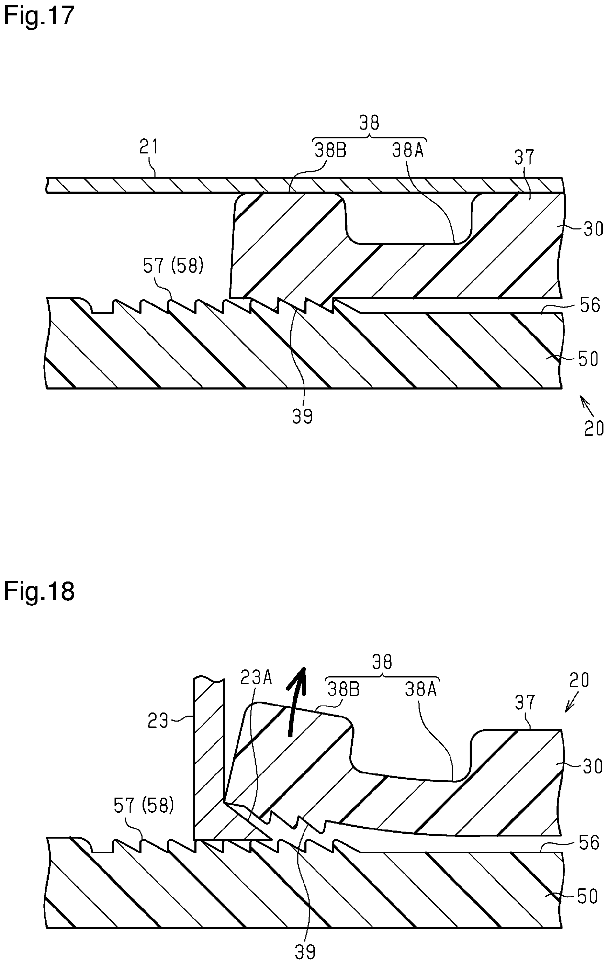

As shown in Figs. 1 to 3, a radiator support 20 has multiple (ten in the present embodiment) insert nuts 30, which are used to fasten and fix a vehicle frame member 21 (shown in Figs. 16 and 17, but omitted in Figs. 1 to 3). Figs. 1 to 3 show only one of the insert nuts 30. In the present embodiment, the radiator support 20 corresponds to the resin component, and the frame member 21 corresponds to a member-to-be-fastened-and-fixed, and the insert nut 30 corresponds to an internal thread member.

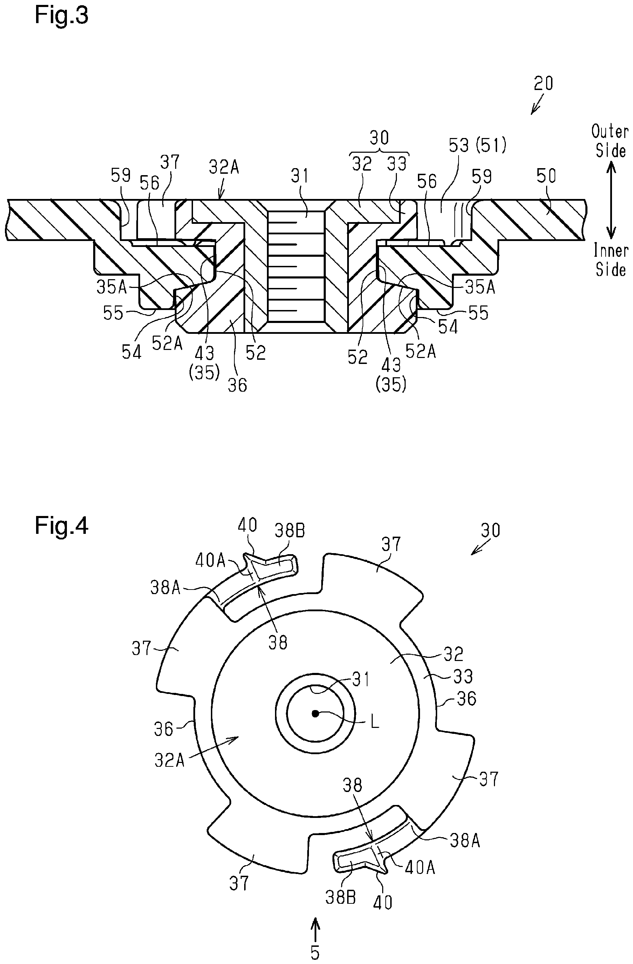

The insert nut 30 includes a nut portion 32 and a thread main body 33. The nut portion 32 is made of a metallic material and includes an internal thread 31 at the center. The thread main body 33 is made of a synthetic resin and surrounds the entire perimeter of the nut portion 32. The nut portion 32 is a general-purpose product. Specifically, the nut portion 32 is a knurled nut that has a flange at one end 32A (the upper end as viewed in Fig. 3) in the fastening direction of the internal thread 31. The outer surface of the flange is knurled. The insert nut 30 is formed by insert molding. Specifically, a synthetic resin is injected into a mold with the nut portion 32 placed in the mold, so that the nut portion 32 and the thread main body 33 are integrally molded. In the present embodiment, the insert nut 30 is manufactured inexpensively by using a general-purpose knurled nut.

In the insert nut 30, the end 32A of the nut portion 32 slightly protrudes from the outer surface (the upper surface as viewed in Fig. 3) of the thread main body 33. The end 32A of the nut portion 32 is also exposed to the outside. Specifically, the outer surface of the end 32A of the nut portion 32 and the outer surface of the thread main body 33 are both flat. The outer surface of the end 32A of the nut portion 32 is located slightly toward the outer side with respect to the outer surface of the thread main body 33 (for example, by several hundred micrometers). In Fig. 3, the protruding amount of the end 32A of the nut portion 32 with respect to the outer surface of the thread main body 33 is exaggerated for the illustrative purposes. In some cases, the direction in which the insert nut 30 approaches the component body 50 in Fig. 2 is referred to as a direction toward an inner side (the lower side in Fig. 2). Also, in some cases, the direction in which the insert nut 30 is separated away from the component body 50 is referred to as a direction toward an outer side (the upper side in Fig. 2). That is, in the fastening direction of the internal thread along a center line L, the direction in which the insert nut 30 is inserted into an attachment hole 51 is referred to as a direction toward the inner side in some cases. Also, the direction in which the insert nut 30 is removed from the attachment hole 51 is referred to as the direction toward the outer side in some cases.

The component body 50 of the radiator support 20 is made of a synthetic resin and shaped like a gate (cap) having a right wall, an upper wall, and a left wall. The component body 50 has multiple (ten in the present embodiment) through-holes (attachment holes 51). An insert nut 30 is inserted into and attached to each attachment hole 51. Specifically, as shown in Figs. 2 and 3, the insert nut 30 has engagement recesses 35 in the outer circumferential surface. The component body 50 has engagement protrusions 52 on the inner circumferential surface of the attachment hole 51. The engagement recesses 35 (specifically, the surfaces defining the recesses 35) and the engagement protrusions 52 are engaged with each other, so that the insert nut 30 is secured in the attachment hole 51 of the component body 50.

In a state in which the insert nut 30 is secured to the component body 50 (the state shown in Fig. 3), the outer surface (the upper surface in Fig. 3) of the end 32A of the nut portion 32 of the insert nut 30 slightly protrudes with respect to the outer surface (the upper surface in Fig. 3) of the component body 50. In this state, the end 32A of the nut portion 32 is exposed to the outside. Specifically, the outer surface of the end 32A of the nut portion 32 and the section of the outer surface of the component body 50 that surrounds the attachment hole 51 are both flat. The outer surface of the end 32A of the nut portion 32 is located slightly toward the outer side (for example, by several hundred micrometers) with respect to the section of the outer surface of the component body 50 that surrounds the attachment hole 51.

The structure of the insert nut 30 will now be described.

As shown in Figs. 4 to 6, the insert nut 30 includes a center tube 36, which is a substantially cylindrical shaft portion of the insert nut 30. The inner circumferential portion of the center tube 36 is the nut portion 32, and the internal thread 31 is provided in the center of the center tube 36. The internal thread 31 is a right-handed thread.

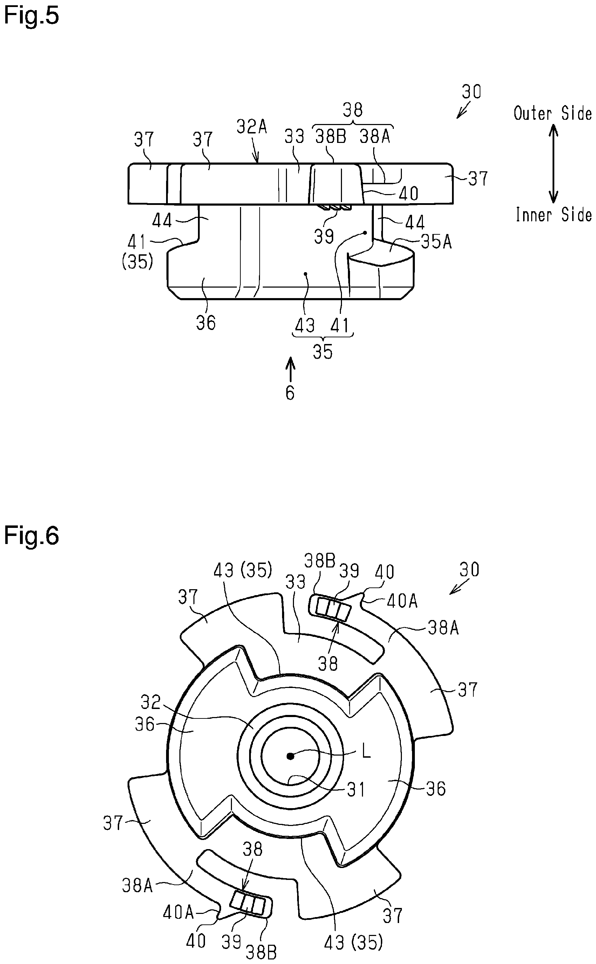

The center tube 36 has four blades 37 at the end on the outer side (the upper side in Fig. 5). The blades 37 protrude toward the outer circumference (radially outward). The blades 37 are equally spaced apart in the peripheral direction of the center tube 36. Each blade 37 has a uniform thickness and extends arcuately in the peripheral direction of the center tube 36.

Two of the four blades 37, which are arranged on the opposite sides of the internal thread 31, each have an integrated ratchet arm 38. The ratchet arm 38 protrudes in a clockwise direction from the radially outer end of the blade 37. Specifically, the ratchet arm 38 extends in an arcuate shape of which the center is the center line L of the center tube 36. The ratchet arm 38 extends along the outer circumferential surface of the center tube 36 at a position spaced apart from the outer circumferential surface. The ratchet arm 38 includes a first end (a proximal end 38A), which is supported by the radially outer end of the blade 37, and a second end (a distal end 38B), which is a free end not supported by the blade 37. The ratchet arm 38 thus has a cantilever-like structure. The ratchet arm 38 is allowed to swing about the proximal end 38A in the direction along the center line L and the radial direction of the internal thread 31. A section of the ratchet arm 38 that includes the proximal end 38A is thinner than the distal end 38B. The ratchet arm 38 is therefore easily elastically deformed (easily swings).

The surface on the outer side (the upper side in Fig. 5) of the distal end 38B of the ratchet arm 38 extends substantially in the same plane as the surface of the thread main body 33 on the outer side. The ratchet arm 38 includes a ratchet rack 39, which has three saw teeth, on the inner side (the lower side in Fig. 5) of the distal end 38B. The ratchet arm 38 also includes an engagement protrusion 40 on the outer circumferential surface of the distal end 38B. The engagement protrusion 40 is substantially triangular in plan view (refer to Fig. 4) and protrudes radially outward. The radially outer surface of the engagement protrusion 40 is inclined such that the radially outer surface is progressively shifted radially outward from the distal end toward the proximal end of the ratchet arm 38. A surface of the engagement protrusion 40 on the side corresponding to the proximal end 38A (a proximal-side surface 40A) extends in the radial direction of the internal thread 31.

As shown in Fig. 5, the center tube 36 includes the two groove-shaped engagement recesses 35 in the outer circumferential surface. The engagement recesses 35 are equally spaced apart in the peripheral direction of the center tube 36. The engagement recesses 35 each include an engagement groove 41, which extends in the circumferential direction, and a guide groove 43, which extends in the direction of the center line L. The guide groove 43 extends to the end on the inner side of the center tube 36 from a first end of the engagement groove 41 (specifically, the leading end in the rotation direction in a case of a clockwise rotation of the insert nut 30 in plan view). A second end (specifically, a trailing end in the rotation direction) of the engagement groove 41 is closed by a section of the outer circumferential wall of the center tube 36 in which the engagement recess 35 is not provided (a partition wall portion 44 shown in Fig. 5). One of the inner surfaces of the engagement groove 41 that is located on the inner side will hereafter be referred to as a contact surface 35A. The contact surface 35A extends along an imaginary clockwise spiral plane of which the spiral axis is a straight line extending in the depth direction of the attachment hole 51 (specifically, the center line L of the center tube 36). The cross-sectional shape in plan view of the bottom surface of the guide groove 43 has an arcuate shape of which the center is the center line L of the center tube 36. The end on the inner side (the lower end in Fig. 5) of the center tube 36 is tapered.

The structure of the component body 50 of the radiator support 20 will now be described.

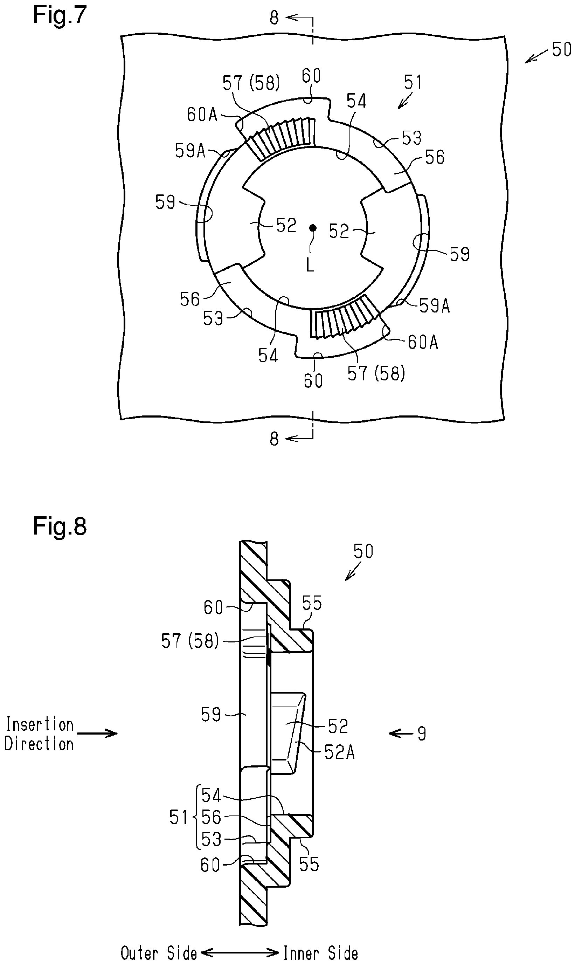

As shown in Figs. 7 to 9, the attachment hole 51 of the component body 50 is a through-hole with a step having a large diameter portion 53 and a small diameter portion 54. The large diameter portion 53 has a larger diameter and is located on the outer side in the insertion direction of the insert nut 30, and the small diameter portion 54 has a smaller diameter and is located on the inner side in insertion direction. Figs. 7 to 9 show only one of the multiple attachment holes 51 provided in the component body 50.

The component body 50 has a tubular portion 55 at the end on the inner side (the right end in Fig. 8) of the periphery of the attachment hole 51. The tubular portion 55 includes the inner circumferential wall of the attachment hole 51, which extends toward the inner side in the insertion direction. The insert nut 30 is inserted into and attached to the attachment hole 51. In a state in which the insert nut 30 is attached to the attachment hole 51 (the state shown in Fig. 3), the front end in the insertion direction of the insert nut 30 of the periphery of the attachment hole 51 of the component body 50 (the above-described tubular portion 55) is a tube that extends along the outer surface of the insert nut 30.

The inner diameter of the attachment hole 51 is slightly greater than the outer diameter of the center tube 36 of the insert nut 30. The two engagement protrusions 52 protrude from the inner circumferential surface of the small diameter portion 54. The engagement protrusions 52 are arcuate as viewed in plan view (refer to Fig. 7) and are equally spaced apart in the peripheral direction of the attachment hole 51. In the present embodiment, the length of the arc in the shape in plan view of the engagement protrusion 52 (an arcuate shape) is shorter than the length of the arc in plan view of the cross section (an arcuate shape) of the bottom surface of the guide groove 43 of the insert nut 30.

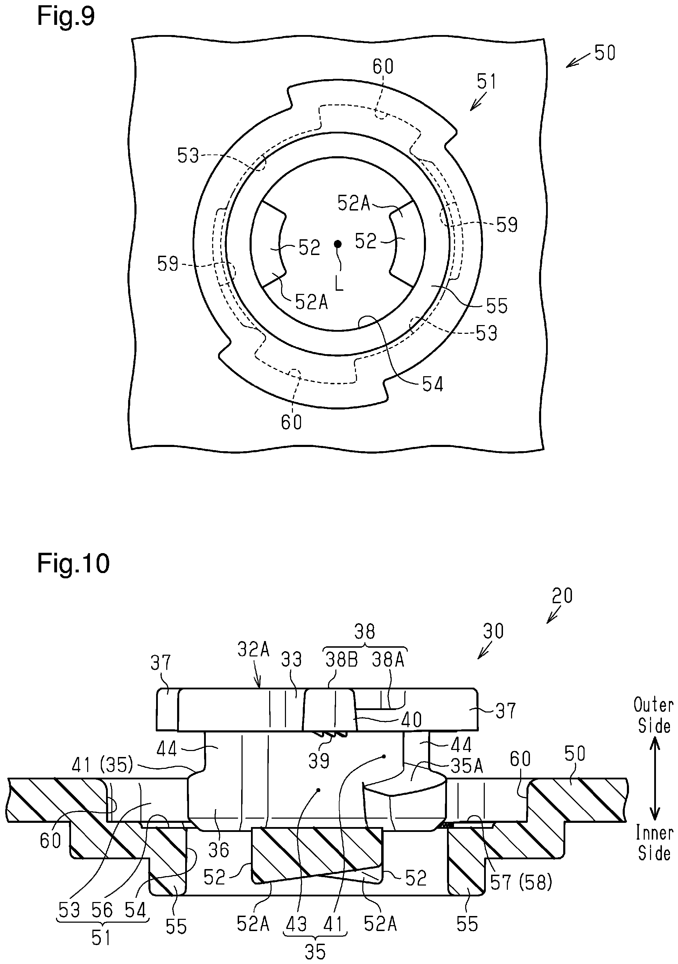

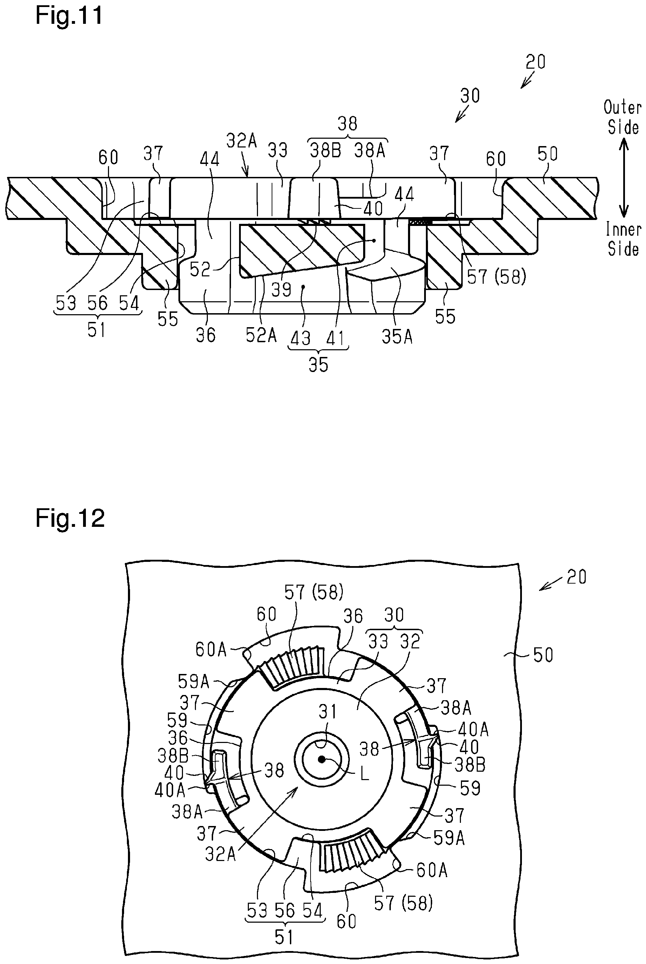

As shown in Figs. 10 to 12, the insert nut 30 is inserted into the attachment hole 51 of the component body 50. At this time, the insert nut 30 is arranged on the outer side of the component body 50 such that, in plan view, the guide grooves 43 of the engagement recesses 35 of the insert nut 30 overlap the engagement protrusions 52 of the attachment hole 51 of the component body 50. In this state (the state shown in Fig. 10), the insert nut 30 is pushed toward the inner side. This causes the engagement protrusions 52 on the inner surface of the attachment hole 51 of the component body 50 to pass the interior of the guide grooves 43 on the outer surface of the insert nut 30, so that the insert nut 30 is inserted into the attachment hole 51 (the state shown in Fig. 11).

As shown in Figs. 7 to 9, one of the outer surfaces of each engagement protrusion 52 that is located on the inner side (the right side in Fig. 8) will hereafter be referred to as a contact surface 52A. The contact surface 52A extends along an imaginary clockwise spiral plane of which the spiral axis is the center line L of the center tube 36 inserted into the attachment hole 51. In the present embodiment, as shown in Fig. 3, the contact surface 52A, which is one of the outer surfaces of the engagement protrusion 52 of the component body 50 on the inner side (the lower side in Fig. 3), and the contact surface 35A, which is one of the inner surfaces of the engagement groove 41 of the insert nut 30 on the inner side (the lower side in Fig. 3), have substantially the same shape.

As shown in Figs. 7 and 8, the attachment hole 51 has a step 56 between the large diameter portion 53 and the small diameter portion 54. The step 56 includes two ratchet racks 57, each having nine saw teeth. In each ratchet rack 57, the nine teeth are arranged in an arc in the peripheral direction (circumferential direction) of which the center is the center line L. The two ratchet racks 39 are equally spaced apart in the peripheral direction of the attachment hole 51. In a state in which the insert nut 30 has been inserted into the attachment hole 51 but has not been rotated (the state shown in Fig. 12), the ratchet racks 57 are at positions where the ratchet racks 57 are not engaged with the ratchet arms 38 (the ratchet racks 39). In a state in which the insert nut 30 has been inserted into the attachment hole 51 and has been rotated approximately 90 degrees clockwise (the state shown in Fig. 1), the ratchet racks 57 are at positions where the ratchet racks 57 are engaged with the ratchet arms 38. In the present embodiment, sections of the step 56 in which the ratchet racks 57 are provided define ratchet recesses 58.

In the present embodiment, the ratchet arms 38 (the ratchet racks 39) of the insert nut 30 and the ratchet recesses 58 (specifically, the ratchet racks 57) of the component body 50 are included in a ratchet mechanism. When the ratchet racks 39, 57 are engaged with each other, the ratchet mechanism allows the insert nut 30 to rotate clockwise in plan view relative to the component body 50, while restricting counterclockwise rotation of the insert nut 30.

As shown in Fig. 12, the inner circumferential surface of the large diameter portion 53 of the attachment hole 51 extends in the circumferential direction at a position slightly radially outward of the traveling paths of the blades 37 when the insert nut 30 inserted into the attachment hole 51 is rotated about the center line L. The large diameter portion 53 has two relief recesses 59, which are recessed radially outward, in the inner circumferential surface. The relief recesses 59 are equally spaced apart in the circumferential direction. Each relief recess 59 has an inclined surface 59A at the front end in the clockwise direction in plan view. The inclined surface 59A is inclined such that the depth in the radially outer direction (the dimension in the radial direction) decreases toward the front end. The large diameter portion 53 also has two accommodating recesses 60, which are recessed radially outward, in the inner circumferential surface. The accommodating recesses 60 are arcuate in plan view and located at positions different from the positions of the relief recesses 59. The accommodating recesses 60 are equally spaced apart in the circumferential direction.

The relief recesses 59 are at positions where the engagement protrusions 40 of the ratchet arms 38 are accommodated in the relief recesses 59 in a state in which the insert nut 30 has been inserted into the attachment hole 51 but has not been rotated (the state shown in Fig. 12). The accommodating recesses 60 are at positions where the engagement protrusions 40 of the ratchet arms 38 are accommodated in the accommodating recesses 60 in a state in which the insert nut 30 has been inserted into the attachment hole 51 and has been rotated approximately 90 degrees clockwise in plan view (the state shown in Fig. 1).

An operation of attaching the insert nut 30 to the component body 50 will now be described together with operational advantages of the radiator support 20 of the present embodiment.

The attachment of the insert nut 30 to the component body 50 is performed by moving the insert nut 30 from the outer side toward the inner side with respect to at least one of the walls of the gate-shaped (cap-shaped) component body 50. Specifically, when the insert nut 30 is attached to the right wall of the component body 50, the insert nut 30 is moved leftward. When the insert nut 30 is attached to the upper wall of the component body 50, the insert nut 30 is moved downward. When the insert nut 30 is attached to the left wall of the component body 50, the insert nut 30 is moved rightward. The attachment of the insert nut 30 is performed using automatic apparatus with a robotic arm.

In the attachment of the insert nut 30, the robotic arm holds the end on the outer side of the insert nut 30 (the upper side in Fig. 2). Specifically, the robotic arm pinches a section in which the blades 37 or the rachet arms 38 are not provided, that is, a section recessed toward the center line L, thereby holding the insert nut 30. This allows the insert nut 30 to be inserted into the attachment hole 51 of the component body 50 together with the distal end of the robotic arm, which is holding the insert nut 30.

Then, as shown in Figs. 10 and 12, the insert nut 30 is moved to a position at which the engagement protrusions 52 of the component body 50 and the guide grooves 43 of the engagement recesses 35 of the insert nut 30 overlap each other in plan view. Thereafter, as shown in Figs. 11 and 12, the insert nut 30 is pushed into the attachment hole 51 of the component body 50. This causes the engagement protrusions 52 of the component body 50 to pass the interior of the engagement recesses 35 (specifically, the guide grooves 43) of the insert nut 30. Accordingly, the insert nut 30 is moved toward the inner side of the component body 50, so that the insert nut 30 is inserted into the attachment hole 51 of the component body 50. In the present embodiment, the end on the inner side of the center tube 36 of the insert nut 30 is tapered. Thus, when the center tube 36 is inserted into the attachment hole 51 of the component body 50, the center tube 36 is prevented from abutting the inner edge of the attachment hole 51, so that the insertion of the center tube 36 is not hampered. This facilitates the operation of attaching the insert nut 30 to the component body 50.

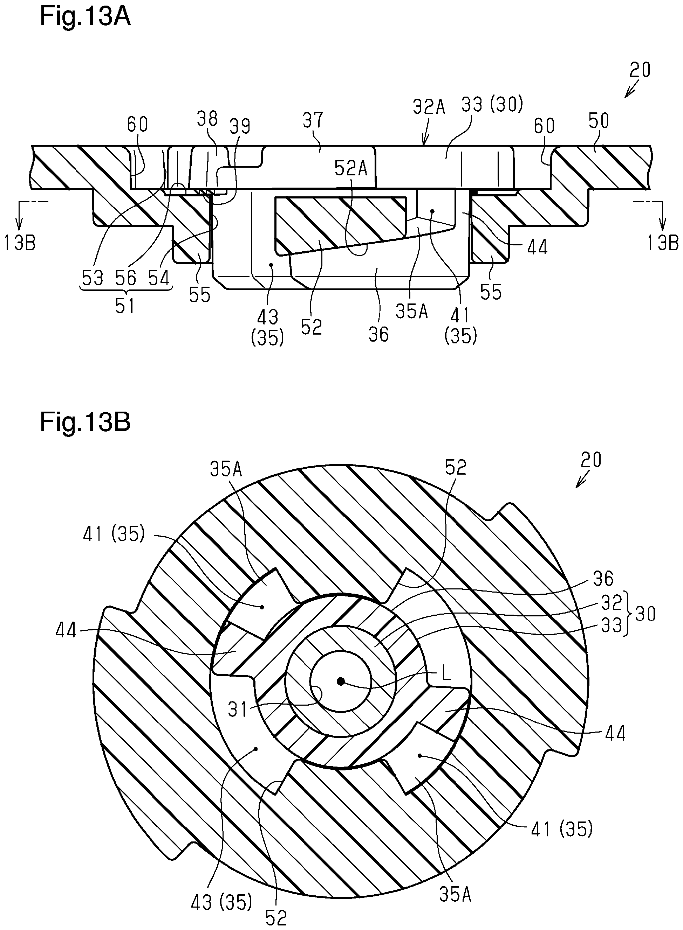

Thereafter, the insert nut 30 is rotated clockwise in plan view. At this time, the insert nut 30 is guided by engagement between the engagement recesses 35 in the outer circumferential surface (specifically, the engagement grooves 41) and the engagement protrusions 52 on the inner surface of the attachment hole 51 of the component body 50. In the present embodiment, the surface of each engagement protrusion 52 includes a section on the inner side in the insertion direction (the contact surface 52A), and the surface defining each engagement recess 35 includes a section on the inner side (the contact surface 35A). The contact surfaces 52A and 35A both extend along an imaginary spiral plane of which the spiral axis is the center line L. Thus, when the insert nut 30 is rotated clockwise in plan view with the engagement protrusions 52 and the engagement recesses 35 engaged with each other, the contact surfaces 52A and 35A of the engagement protrusions 52 and the engagement recess 35 contact each other as in an example shown in Figs. 13A and 13B. When the insert nut 30 is rotated further, the surface pressure between the contact surfaces 52A and 35A increases. In the present embodiment, when the surface pressure between the contact surfaces 52A and 35A reaches or exceeds a predetermined value, the rotation of the insert nut 30 (specifically, the rotation of the robotic arm) is stopped.

In the present embodiment, the insert nut 30 is secured in the attachment hole 51 of the component body 50 by increasing the surface pressure between the contact surfaces 52A and 35A of the engagement protrusions 52 and the engagement recesses 35. In this case, the high surface pressure acting on the contact surfaces 52A and 35A of the engagement protrusions 52 and the engagement recesses 35 limits chattering of the insert nut 30.

In the present embodiment, although limited within the ranges of the manufacturing tolerances, the engagement protrusions 52 of the component body 50 may be made thin or the engagement recesses 35 of the insert nut 30 may be widened. In this case, the contact surface pressure between the contact surfaces 52A of the engagement protrusions 52 and the contact surfaces 35A of the engagement recesses 35 is unlikely to increase in some cases. Thus, when the insert nut 30 is rotated clockwise in plan view with the engagement protrusions 52 and the engagement recesses 35 engaged with each other, the surface pressure between the contact surfaces 52A and 35A may fail to reach or exceed the predetermined value.

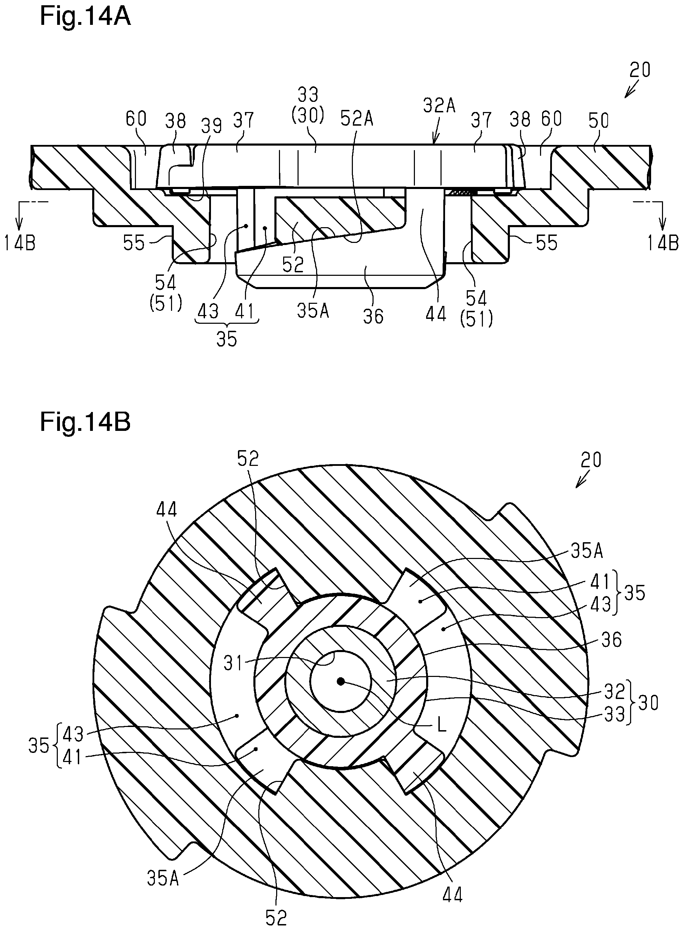

In this respect, in the present embodiment, the engagement protrusions 52 of the component body 50 abut the partition wall portions 44 of the insert nut 30 as shown in Figs. 14A and 14B when the insert nut 30 rotates a certain amount. This prevents the insert nut 30 from rotating excessively. Further, in addition to the increase in the contact surface pressure between the contact surfaces 52A of the engagement protrusions 52 and the contact surfaces 35A of the engagement recesses 35 (where the surface pressure < the predetermined value), the leading end in the rotation direction of each engagement protrusion 52 and the corresponding partition wall portion 44 of the insert nut 30 contact each other (abut each other). This limits chattering of the insert nut 30.

In the present embodiment as described above, when the insert nut 30 is inserted into the attachment hole 51 of the component body 50 and rotated in the circumferential direction, the engagement protrusions 52 on the inner circumferential surface of the attachment hole 51 and the engagement recesses 35 in the outer circumferential surface of the insert nut 30 are engaged with each other. The insert nut 30 is thus attached to the component body 50. In the present embodiment, as shown in Fig. 3, the insert nut 30 is attached to the component body 50 in a state in which the contact surfaces 52A of the engagement protrusions 52 and the contact surfaces 35A of the engagement recesses 35, which are opposed to each other in the insertion direction of the insert nut 30 (the vertical direction in Fig. 3), contact each other. Thus, the insert nut 30 is attached to the component body 50 in a manner ensuring a high strength against a force (pull-out load) that acts to pull out the insert nut 30 from the attachment hole 51 of the component body 50.

The present embodiment includes the ratchet mechanism having the ratchet arms 38 of the insert nut 30 and the ratchet recesses 58 of the component body 50. The ratchet mechanism is structured to allow the insert nut 30 to rotate clockwise relative to the component body 50 in plan view of the insert nut 30. Thus, when the insert nut 30 is rotated clockwise in plan view (in a direction indicated by arrow R in Fig. 15), the ratchet arms 38 of the insert nut 30 and the ratchet recesses 58 of the component body 50 are engaged with each other as shown in Fig. 15.

The ratchet mechanism is structured such that, when the ratchet arms 38 of the insert nut 30 and the ratchet recesses 58 of the component body 50 are engaged with each other, counterclockwise rotation in plan view of the insert nut 30 relative to the component body 50 is restricted. Thus, when the insert nut 30 is attached to the component body 50, the insert nut 30 is prevented from being loosened due to an undesired counterclockwise rotation after the ratchet mechanism enters an engaged state.

Further, in the present embodiment, when the insert nut 30 is attached to the component body 50, the engagement protrusions 40 of the ratchet arms 38 are accommodated in the relief recesses 49 of the large diameter portion 53 of the component body 50 as shown in Fig. 12 before the insert nut 30 is rotated clockwise in plan view. When the insert nut 30 is rotated clockwise in plan view, the ratchet arms 38 are guided by the inclined surfaces 59A of the relief recesses 59 to be elastically deformed toward the center line L. This causes the engagement protrusions 40 of the ratchet arms 38 to escape the interior of the relief recesses 59. When the insert nut 30 is rotated further, the engagement protrusions 40 of the ratchet arms 38 are located between the center line L and the accommodating recesses 60 of the large diameter portion 53 of the component body 50. The ratchet arms 38 are then restored to their original shapes (i.e. their shapes prior to the elastic deformation), so that the engagement protrusions 40 of the ratchet arms 38 are accommodated in the accommodating recesses 60 (the state shown in Fig. 1). Thus, once the insert nut 30 is attached to the component body 50, the proximal-side surfaces 40A of each engagement protrusion 40 and the end face 60A of the corresponding accommodating recess 60 abut each other even if the insert nut 30 is loosened (even if the insert nut 30 is rotated counterclockwise in plan view). Since further rotation of the insert nut 30 is restricted, the insert nut 30 is prevented from being loosened.

In a radiator support made of a metallic material of a first comparative example, a metal nut for fixing a frame member can be directly fixed (welded) to the radiator support. Since the metal nut does not have to be removed when the radiator support is discarded, the radiator support is easy to recycle.

In a radiator support made of a synthetic resin of a second comparative example, a metal nut cannot be directly welded to the radiator support. In the radiator supports of the comparative examples, an internal thread member (for example, a pop nut) can be fixed by swaging. These radiator supports not only need a costly tool for swaging, but also require troublesome operations when the internal thread members are removed for recycle or repair.

A nut may be arranged on the back of the radiator support of the second comparative example, which is made of a synthetic resin. The radiator support and the frame member are held between the nut and a bolt, so that the radiator support and the frame member are fixed to each other. The radiator support thus has a structure that withstands a high pull-out load. However, if an automatic apparatus is used to attach a nut to the radiator support, a robotic arm needs to enter a narrow space on the inner side of the radiator support in the engine compartment. The attachment of the nut is thus difficult.

As compared with these comparative examples, the radiator support 20 of the present embodiment allows a robotic arm of an automatic apparatus to easily attach the insert nut 30 to the radiator support 20 (the component body 50) from the outer side such that the insert nut 30 withstands a high pull-out load. Further, since the insert nut 30 can be removed from the component body 50 by being rotated counterclockwise in plan view, the radiator support 20 can be easily recycled or repaired.

As shown in Fig. 16, the frame member 21 is fixed to the radiator support 20 using the internal thread 31 of the insert nut 30 and a fastening-fixing bolt 22. Specifically, the frame member 21 is threaded to the internal thread 31 of the insert nut 30 in a state in which the bolt 22 is passed through an insertion hole 21A of the frame member 21.

In the present embodiment, the outer surface (the upper surface in Fig. 16) of the end 32A of the nut portion 32 of the insert nut 30 slightly protrudes with respect to the outer surface (the upper surface in Fig. 16) of the component body 50. Also, the end 32A of the nut portion 32 is exposed to the outside of the radiator support 20. Thus, when the frame member 21 is fixed to the radiator support 20, the frame member 21 and the end 32A of the nut portion 32 are brought into contact with each other by arranging the frame member 21 at a proper position (the position shown in Fig. 16). In this state, fastening and fixing are performed using the internal thread 31 of the insert nut 30 and the bolt 22, so that the frame member 21 is fastened and fixed to the radiator support 20 with the frame member 21 and the end 32A of the nut portion 32 contacting each other (a metal-to-metal contact state). This builds a firm fixation structure.

In the present embodiment, the internal thread 31 of the insert nut 30 is a right-handed thread, and the contact surface 52A of each engagement protrusion 52 and the contact surface 35A of the corresponding engagement recess 35 extend along a spiral plane extending clockwise. Thus, the rotational force that acts on the insert nut 30 when the bolt 22 is threaded to the internal thread 31 of the insert nut 30 acts in a direction rotating the insert nut 30 in a direction increasing the surface pressure between the contact surface 52A of the engagement protrusion 52 and the contact surface 35A of the engagement recess 35. The structure therefore prevents the internal thread 31 of the insert nut 30 from being loosened when the internal thread 31 and the bolt 22 are threaded to each other.

When a force that separates the frame member 21 fixed to the radiator support 20 from the radiator support 20 is applied to the frame member 21, specifically, when a force that pulls out the insert nut 30 from the attachment hole 51 of the component body 50 is applied to the frame member 21, the component body 50 is likely to be deformed in the following manner. That is, the force (pull-out load) acts such that the contact surface 35A of each engagement recess 35 of the insert nut 30 pushes the contact surface 52A of the corresponding engagement protrusion 52 of the component body 50 toward the outer side (the upper side in Fig. 16), thereby bending the engagement protrusion 52 toward the outer side. Thus, the pull-out load may deform the component body 50 such the opening of the attachment hole 51 on the outer side (on the side corresponding to the frame member 21) is opened. To obtain a high strength that withstands such a pull-out load, it is preferable to limit deformation of the periphery of the attachment hole 51 of the component body 50.

In this regard, in the present embodiment, the end (the tubular portion 55) on the leading side (the lower side in Fig. 16) in the insertion direction of the insert nut 30 in the periphery of the attachment hole 51 of the component body 50 has a tubular shape extending along the outer surface of the insert nut 30. Thus, when a pull-out load acts on the radiator support 20, so that the engagement protrusions 52 are pushed toward the outer side, or deformed and bent, the tubular portion 55, which has a tubular shape at a position adjacent to the engagement protrusions 52, abuts the outer surface of the center tube 36 of the insert nut 30. This limits deformation of the engagement protrusions 52 toward the outer side, thereby limiting deformation of the component body 50 that opens the opening on the outer side of the attachment hole 51. Since the present embodiment limits deformation of the component body 50 due to a pull-out load, the radiator support 20 has a structure that withstands a high pull-out load.

In the present embodiment, the surface on the outer side (the upper side in Fig. 17) of the distal end 38B of each ratchet arm 38 extends substantially in the same plane as the outer surface of the component body 50 as described above. Thus, when the frame member 21 is fastened and fixed to the radiator support 20, the frame member 21 extends along the outer surfaces of the ratchet arms 38 as shown in Fig. 17. Therefore, the outer surface of the distal end 38B of the ratchet arm 38 abuts the frame member 21, thereby preventing the ratchet arm 38 from being deformed toward the outer side away from the ratchet recess 58. Since this prevents the ratchet arms 38 and ratchet recesses 58 from being disengaged from each other unnecessarily, the insert nut 30 is prevented from being rotated unnecessarily and loosened.

As shown in Fig. 18, the insert nut 30 can be easily removed by using a removal tool 23. The removal tool 23 has a protrusion 23A, which is triangular when viewed from the side. When removing the insert nut 30, the protrusion 23A of the removal tool 23 is inserted into the gap between the distal end of the ratchet arm 38 and the ratchet recess 58. This elastically deforms the ratchet arm 38 away from the ratchet recess 58 (the manner shown in Fig. 1). In this state, the insert nut 30 can be rotated counterclockwise in plan view together with the removal tool 23. Accordingly, in a state in which the restriction by the ratchet mechanism is cancelled, rotation of the insert nut 30 allows the insert nut 30 to be removed from the attachment hole 51 of the component body 50.

As described above, the present embodiment provides the following advantages.
(1) The outer surface of the end 32A of the nut portion 32 of the insert nut 30 slightly protrudes with respect to the outer surface of the component body 50. The end 32A of the nut portion 32 is also exposed to the outside. Thus, the frame member 21 is fastened and fixed to the radiator support 20 in a metal-to-metal contact state, in which the frame member 21 and the end 32A of the nut portion 32 contact each other.
(2) When the insert nut 30 is attached to the component body 50, the insert nut 30 is inserted into the attachment hole 51 of the component body 50, and the insert nut 30 is rotated in the circumferential direction. This allows the engagement protrusions 52 on the inner circumferential surface of the attachment hole 51 and the engagement recesses 35 in the outer circumferential surface of the insert nut 30 to be engaged with each other, so that the insert nut 30 is secured to the component body 50.
(3) The contact surface 52A of each engagement protrusion 52 and the contact surface 35A of the corresponding engagement recess 35 have shapes that extend along an imaginary spiral plane of which the spiral axis is the center line L. When the insert nut 30 is attached to the component body 50, the insert nut 30 is rotated in the circumferential direction in a state in which the engagement protrusions 52 and the engagement recesses 35 are engaged with each other. This increases the surface pressure between the contact surfaces 52A and 35A of the engagement protrusions 52 and the engagement recesses 35, thereby limiting the insert nut 30 from chattering.
(4) One end in the circumferential direction of the engagement groove 41 of each engagement recess 35 is the partition wall portion 44, which closes the engagement recess 35. Thus, the partition wall portions 44 contacting the engagement protrusions 52 of the component body 50 prevent the insert nut 30 from being rotated excessively. Further, when the engagement protrusions 52 of the component body 50 abut the partition wall portions 44 of the insert nut 30, chatttering of the insert nut 30 is limited.
(5) The radiator support 20 includes the ratchet mechanism, and the ratchet mechanism includes the ratchet arms 38, which are integrated with the insert nut 30, and the ratchet recesses 58, which are provided in the component body 50. Thus, when the insert nut 30 is attached to the component body 50, the insert nut 30 is rotated clockwise in plan view with respect to the insert nut 30. Further, after the insert nut 30 is attached to the component body 50, the ratchet mechanism prevents the insert nut 30 from being rotated counterclockwise in plan view unnecessarily and loosened.
(6) The surface on the outer side of the distal end 38B of each ratchet arm 38 extends substantially in the same plane as the outer surface of the component body 50. Thus, the outer surface of the distal end 38B of each ratchet arm 38 abuts the frame member 21 in a state in which the frame member 21 is fastened and fixed to the radiator support 20. At this time, the ratchet arm 38 is prevented from being elastically deformed toward the outer side away from the ratchet recess 58. Since this prevents the ratchet arms 38 and ratchet recesses 58 from being unnecessarily disengaged from each other, the insert nut 30 is prevented from being rotated unnecessarily and loosened.
(7) The end on the inner side of the periphery of the attachment hole 51 of the component body 50 (the tubular portion 55) has a tubular shape that protrudes such that the inner circumferential wall of the attachment hole 51 extends toward the inner side. This prevents the component body 50 from being deformed by a pull-out load, so that the radiator support 20 has a structure that withstands a high pull-out load.

The above illustrated embodiment may be modified as follows. The above-described embodiment and the following modifications can be combined as long as the combined modifications remain consistent with each other.

The insert nut 30 may have a structure in which the surface on the outer side of the thread main body 33 and the surface on the outer side of the end 32A of the nut portion 32 extend on the same plane.

The radiator support 20 may have a structure in which the surface on the outer side of the end 32A of the nut portion 32 and the surface on the outer side of the periphery of the attachment hole 51 of the component body 50 extend on the same plane.

In the structure of the insert nut 30, the surface on the outer side of the distal end 38B of each ratchet arm 38 may be located slightly toward the outer side with respect to the surface on the outer side of the thread main body 33 (specifically, the center tube 36 or the blades 37). Also, in the structure of the insert nut 30, the surface on the outer side of the distal end 38B of each ratchet arm 38 may be located slightly toward the inner side with respect to the surface on the outer side of the thread main body 33 (specifically, the center tube 36 or the blades 37).

The engagement protrusions 40 of the ratchet arms 38, and the relief recesses 59 and the accommodating recesses 60 of the component body 50 may be omitted.

The ratchet arms 38 and the ratchet recesses 58 (the ratchet racks 57) may be omitted.

Instead of providing the tubular portion 55 in a section on the inner side of the periphery of the attachment hole 51 of the component body 50, two or more wall portions that extend along the center line L may be provided about the center line L at equal intervals. Alternatively, the tubular portion 55 of the component body 50 can be omitted.

The insert nut 30 may be structured such that the two engagement recesses 35 are continuous. In this structure, the width of the engagement recess 35 is preferably reduced, or the thickness of the engagement protrusion 52 is preferably increased, so as to increase the surface pressure between the contact surface 52A of the engagement protrusion 52 and the contact surface 35A of the engagement recess 35. This structure causes rotation of the insert nut 30 to be stopped when the insert nut 30 is rotated only by a predetermined amount.

The contact surface 52A of each engagement protrusion 52 and the contact surface 35A of the corresponding engagement recess 35 do not necessarily need to have shapes that extend along a spiral plane, but may have flat shapes orthogonal to the center line L. Even in this structure, the insert nut 30 can be secured to the component body 50 by determining the shapes of the engagement protrusions 52 and the engagement recesses 35 such that the contact surface pressure between the outer surface of each engagement protrusion 52 and the inner surface of the corresponding engagement recess 35 is increased to a sufficient level.

A general-purpose nut other than a knurled nut may be used as the nut portion 32. Alternatively, a dedicated part that has been uniquely designed may be employed.

The insert nut 30 does not necessarily need to be manufactured by insert molding. Instead, an insert nut may be manufactured by preparing a thread main body and a nut portion separately, and fixing the nut portion to the thread main body, for example, by bonding.

The resin component of the above-described embodiment is not limited to the radiator support 20 made of a synthetic resin, to which the insert nut 30 is attached, but may be any resin component to which an internal thread member having a nut made of a metallic material is attached.

A resin component according to a second embodiment of the present disclosure will now described.

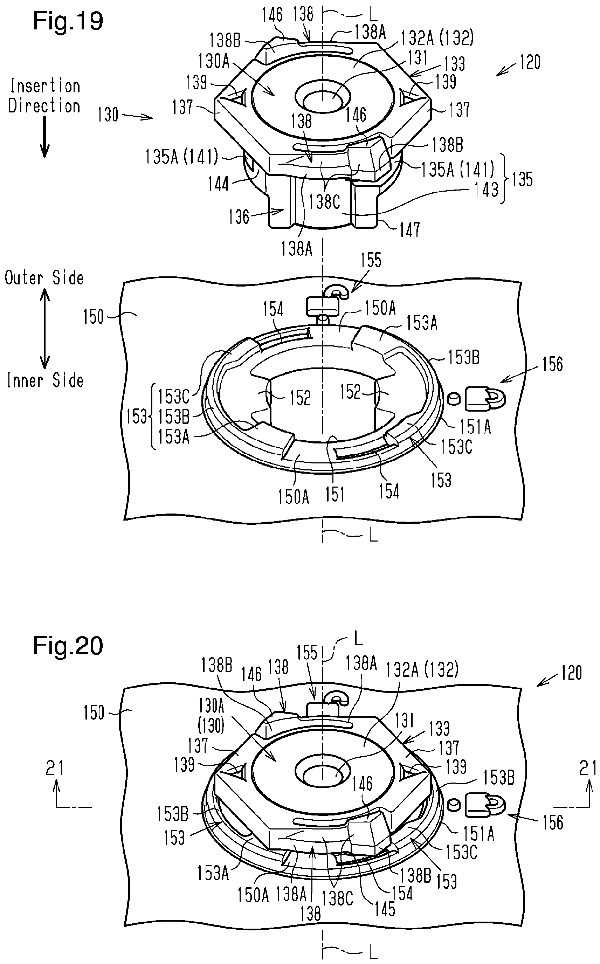

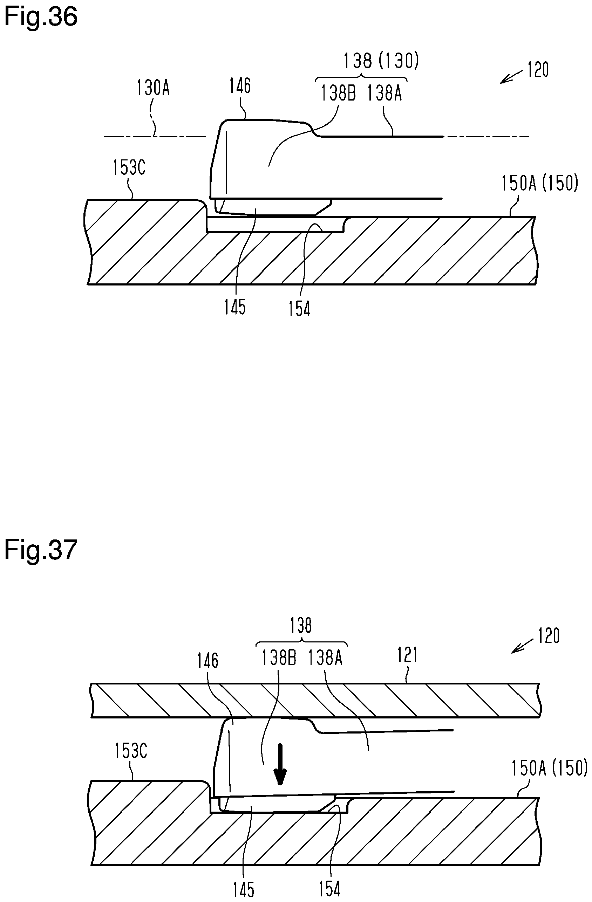

As shown in Figs. 19 to 21, a radiator support 120 has multiple (ten in the present embodiment) insert nuts 130, which are used to fasten and fix a vehicle frame member 121 (shown in Fig. 37, but omitted in Figs. 19 to 21). Figs. 19 to 21 show only one of the insert nuts 130. In the present embodiment, the radiator support 120 corresponds to the resin component, and the frame member 121 corresponds to a member-to-be-fastened-and-fixed, and the insert nut 130 corresponds to an internal thread member.

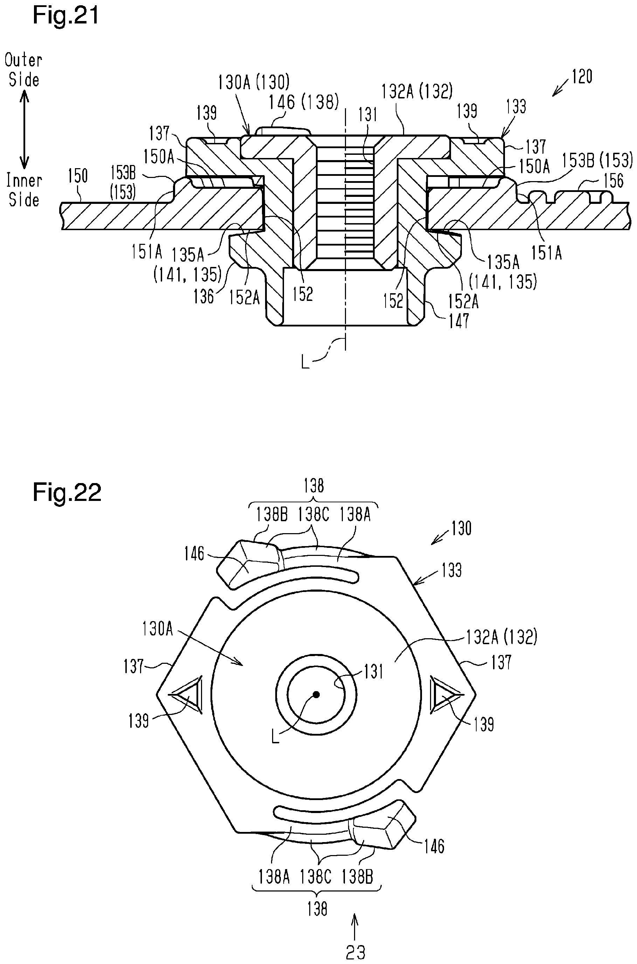

The insert nut 130 includes a nut portion 132 and a thread main body 133. The nut portion 132 is made of a metallic material and includes an internal thread 131 at the center. The thread main body 133 is made of a synthetic resin and surrounds the entire perimeter of the nut portion 132. The nut portion 132 is a general-purpose product. Specifically, the nut portion 132 is a knurled nut that has a flange at one end 132A (the upper end in Fig. 21) in the fastening direction (the direction along the spiral axis of the external thread 131) of the internal thread 131. The outer surface of the flange is knurled. The insert nut 130 is formed by insert molding. Specifically, a synthetic resin is injected into a mold with the nut portion 132 placed in the mold, so that the nut portion 132 and the thread main body 133 are integrally molded. In the present embodiment, the insert nut 130 is manufactured inexpensively by using a general-purpose knurled nut as the nut portion 132.

In the insert nut 130, the end 132A of the nut portion 132 slightly protrudes from the outer surface (the upper surface as viewed in Fig. 21) of the thread main body 133. The end 132A of the nut portion 132 is also exposed to the outside. Specifically, the outer surface of the end 132A of the nut portion 132 and the outer surface of the thread main body 133 (specifically, the section excluding engagement arms 138, which will be discussed below) are both flat. The outer surface of the end 132A of the nut portion 132 is located slightly toward the outer side with respect to the outer surface of the thread main body 133 (for example, by several hundred micrometers). In Fig. 3, the protruding amount of the end 132A of the nut portion 132 with respect to the outer surface of the thread main body 133 is exaggerated for the illustrative purposes.

The component body 150 of the radiator support 120 is made of a synthetic resin and shaped like a gate (cap) having a right wall, an upper wall, and a left wall. The component body 150 has multiple (ten in the present embodiment) through-holes (attachment holes 151). The insert nut 130 is inserted into each attachment hole 151 and attached to the component body 150. Specifically, as shown in Figs. 19 and 21, the insert nut 130 has engagement recesses 135 in the outer circumferential surface. The component body 150 has engagement protrusions 152 on the inner circumferential surface of the attachment hole 151. The engagement recesses 135 (specifically, the surfaces defining the recesses 135) and the engagement protrusions 152 are engaged with each other, so that the insert nut 130 is secured in the attachment hole 151 of the component body 150.

In a state in which the insert nut 130 is secured to the component body 150 (the state shown in Fig. 21), the outer surface (the upper surface in Fig. 21) of the nut portion 132 of the insert nut 130 protrudes from the outer surface (the upper surface in Fig. 21) of the component body 150. In this state, the end 132A of the nut portion 132 is exposed to the outside. In the present embodiment, the section of the outer surface of the component body 150 around the attachment hole 151 corresponds to a first fixation surface 150A on the side of the component body 150 to which the frame member 121 is fixed. Also, the outer surface of the end 132A of the nut portion 132 corresponds to a second fixation surface 130A on the side of the insert nut 130 to which the frame member 121 is fixed.

The structure of the insert nut 130 will now be described.

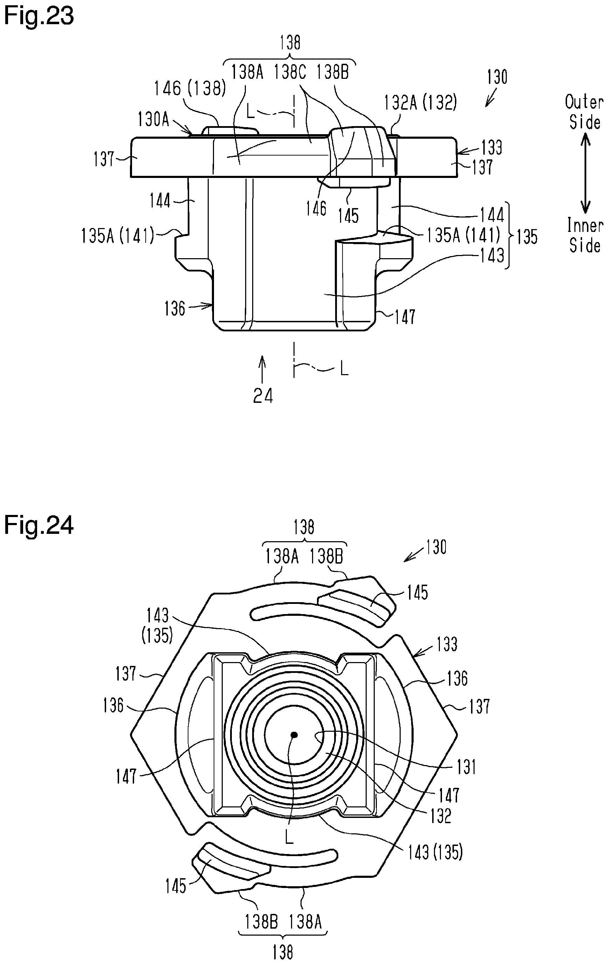

As shown in Figs. 21 and 23, the insert nut 130 includes a center tube 136, which is a substantially cylindrical shaft portion of the insert nut 130. The inner circumferential portion of the center tube 136 is the nut portion 132, and the internal thread 131 is provided in the center of the center tube 136. The internal thread 131 is a right-handed thread.

The center tube 136 has four blades 137 at the end on the outer side (the upper side in Fig. 23). The blades 137 protrude toward the outer circumference (radially outward). The blades 137 extend in a uniform thickness and are equally spaced apart in the peripheral direction (circumferential direction) of the center tube 136. When viewed from the outer side in the fastening direction (hereinafter, plan view [refer to Fig. 22]), each blade 137 extends such that its tip in the radial direction (one of the corners of the hexagon) is defined by two flat surfaces intersecting each other at 120 degrees. Each blade 137 has a substantially triangular marker recess 139 (Fig. 22) on the outer surface in the vicinity of the tip, which forms a 120-degree corner.

Each blade 137 includes an integrated engagement arm 138. The engagement arm 138 protrudes in a counterclockwise direction from the radially outer end of the blade 137. Specifically, the engagement arm 138 extends in an arcuate shape of which the center is the center line L of the center tube 136. The engagement arm 138 extends along the outer circumferential surface of the center tube 136 at a position spaced apart radially outward from the outer circumferential surface. The engagement arm 138 includes a first end (a proximal end 138A), which is supported by the radially outer end of the blade 137, and a second end (a distal end 138B), which is a free end not supported by the blade 137. The engagement arm 138 thus has a cantilever-like structure. The engagement arm 138 is allowed to be elastically deformed such that the distal end 138B swings about the proximal end 138A in the direction along the center line L or the radial direction of the internal thread 131.

The radially outer section at the end on the outer side (the upper side in Fig. 23) of the insert nut 130 includes the two blades 137 and the two engagement arms 138. The section at the end on the outer side of the insert nut 130 that corresponds to the outer circumferential surface of the insert nut 130 has a substantially hexagonal shape in plan view (Fig. 22). Each engagement arm 138 includes an inclined surface 138C in a section that is included in the outer circumferential surface of the insert nut 130. The inclined surface 138C is inclined such that the inclined surface 138C is progressively shifted radially outward as the distance from the second fixation surface 130A of the insert nut 130 increases.

In the present embodiment, the section on the outer side of the insert nut 130 has a shape that is fitted inside the hexagonal recess of a hexagon socket. Specifically, when a hexagon socket is fitted to the insert nut 130 from the outer side, the inner surface of the hexagon socket pushes the inclined surfaces 138C of the engagement arms 138. Accordingly, the engagement arms 138 are elastically deformed toward the inner side of the hexagon nut until the end on the outer side of the insert nut 130 is accommodated in the hexagon socket.

The distal end 138B of each engagement arm 138 has a shape that forms one corner of the hexagonal shape. The distal end 138B has a fitting protrusion 145 on the surface on the inner side (the lower side in Fig. 23). In some cases, the direction in which the insert nut 130 approaches the component body 150 is referred to as a direction toward an inner side (the lower side in Fig. 23). Also, in some cases, the direction in which the insert nut 130 is separated away from the component body 150 is referred to as a direction toward an outer side (the upper side in Fig. 23). That is, in the fastening direction of the internal thread along the center line L, the direction in which the insert nut 130 is inserted into an attachment hole 151 is referred to as a direction toward the inner side in some cases. Also, the direction in which the insert nut 130 is removed from the attachment hole 151 is referred to as the direction toward the outer side in some cases. The fitting protrusion 145 extends substantially arcuately in the peripheral direction (circumferential direction) of the center tube 136. The distal end 138B has a pushing protrusion 146 on the surface on the outer side (the upper side in Fig. 23). The pushing protrusion 146 has a shape that protrudes further toward the outer side than the second fixation surface 130A in a state in which the engagement arm 138 is not elastically deformed.

The center tube 136 has the two groove-shaped engagement recesses 135, which are equally spaced apart in the peripheral direction of the center tube 136. As shown in Fig. 23, the engagement recesses 135 each include an engagement groove 141, which extends in the circumferential direction (peripheral direction), and a guide groove 143, which extends in the direction of the center line L. The guide groove 143 extends to the end on the inner side of the center tube 136 (the lower end in Fig. 23) from a first end of the engagement groove 141 (specifically, the leading end in the rotation direction in a case of a clockwise rotation of the insert nut 130 in plan view [a rotation in an attachment direction]). A second end (specifically, a trailing end in the rotation direction) of the engagement groove 141 is closed by a partition wall portion 144, or a section of the outer circumferential wall of the center tube 136 in which the engagement recess 135 is not provided. One of the inner surfaces of the engagement groove 141 that is located on the inner side will hereafter be referred to as a contact surface 135A. The contact surface 135A extends along an imaginary clockwise spiral plane of which the spiral axis is a straight line extending in the depth direction of the attachment hole 151 (specifically, the center line L of the center tube 136). The cross-sectional shape in plan view of the bottom surface of the guide groove 143 has an arcuate shape of which the center is the center line L of the center tube 136. An end 147 on the inner side of the center tube 136 extends along the center line L such that the shape of the cross section of the end 147 is substantially a square as shown in Fig. 24.

The structure of the component body 150 of the radiator support 120 will now be described.

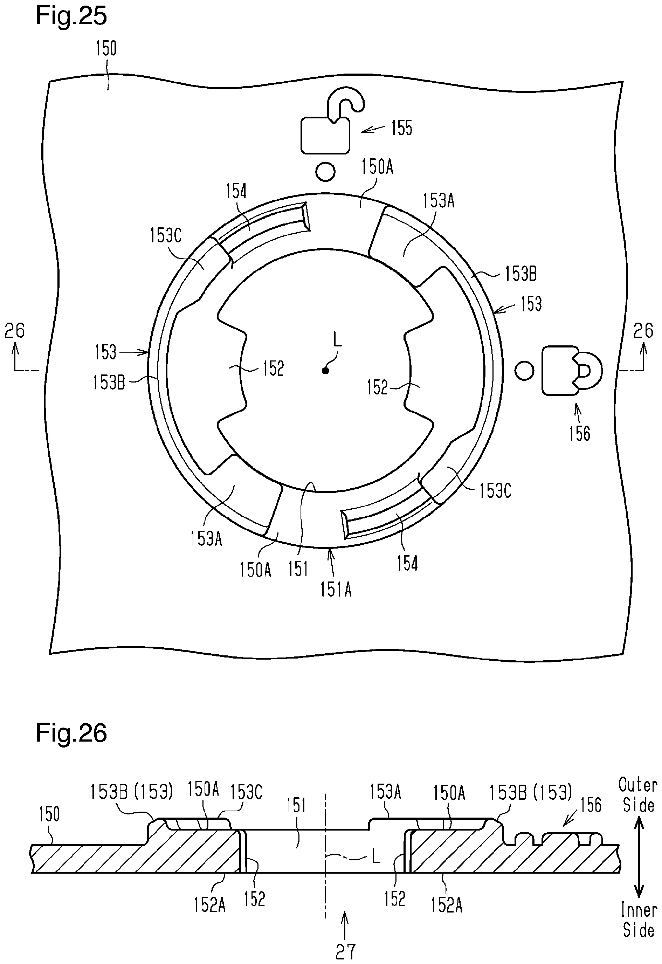

As shown in Figs. 25 to 27, the attachment hole 151 of the component body 150 is a through-hole having a circumferential surface with a circular cross section. Figs. 25 to 27 show only one of the multiple attachment holes 151 provided in the component body 150.

The attachment hole 151 has the two engagement protrusions 152 on the inner circumferential surface. The distal end faces of the engagement protrusions 152 are arcuate in plan view (refer to Fig. 25) and are equally spaced apart in the peripheral direction of the attachment hole 151. In the present embodiment, the length of the arc in the shape in plan view of the engagement protrusion 152 (an arcuate shape) is shorter than the length of the arc in plan view of the cross section (an arcuate shape) of the bottom surface of the guide groove 143 of the insert nut 130.

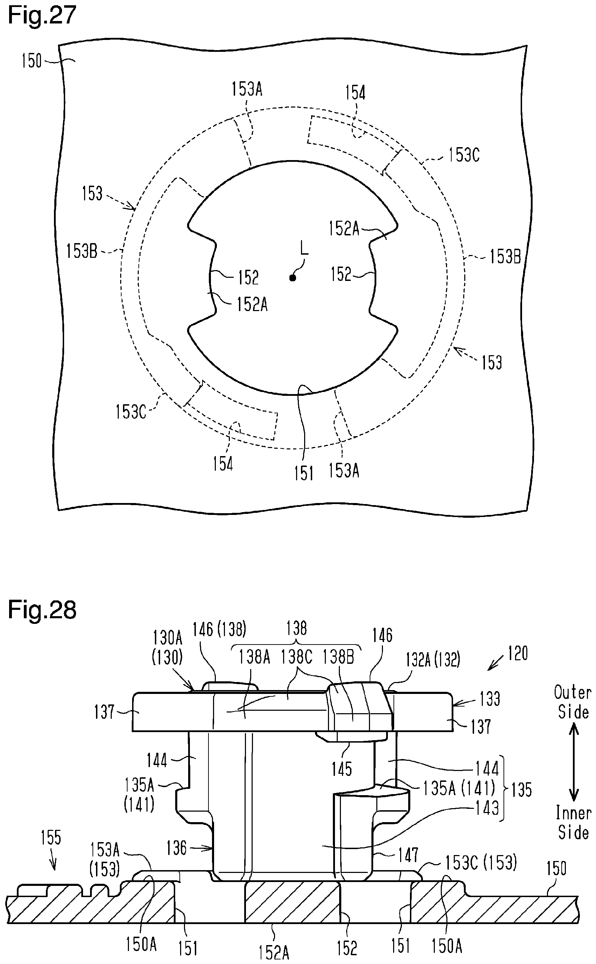

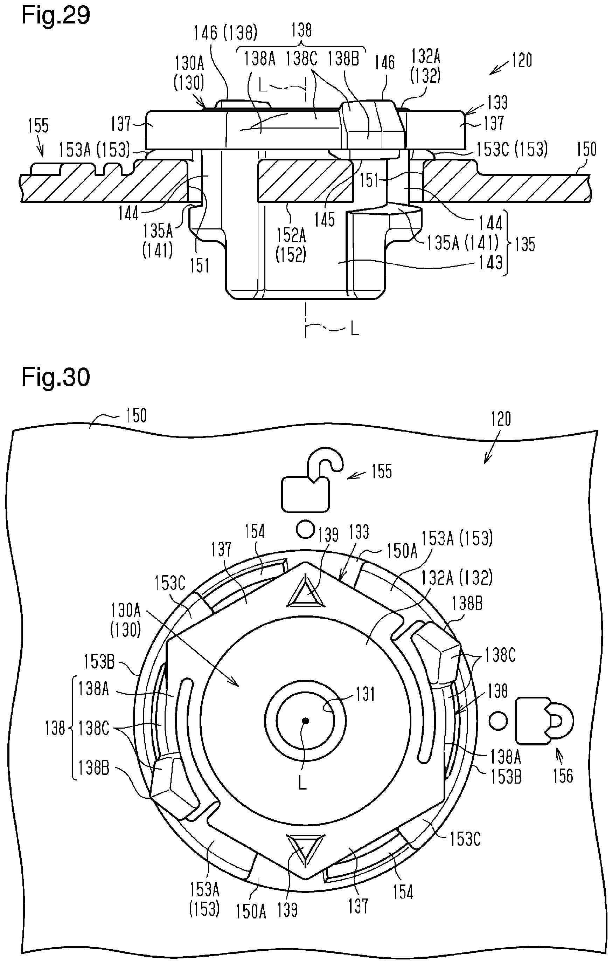

As shown in Figs. 28 to 30, the insert nut 130 is inserted into the attachment hole 151 of the component body 150. At this time, the insert nut 130 is arranged on the outer side (in the direction along the center line L) of the component body 150 so that the guide groove 143 of the engagement recess 135 of the insert nut 130 overlaps in the direction of the center line L with the engagement protrusion 152 of the attachment hole 151 of the component body 150 in plan view. In this state (the state shown in Fig. 28), the insert nut 130 is pushed toward the inner side (in the direction along the center line L). This causes the engagement protrusions 152 on the inner circumferential surface of the attachment hole 151 of the component body 150 to pass the interior of the guide grooves 143 on the outer surface of the insert nut 130, so that the insert nut 130 is inserted into the attachment hole 151 (the state shown in Fig. 29).

As shown in Figs. 25 to 27, an inner edge section 151A of the attachment hole 151 on the outer surface of the component body 150 protrudes toward the outer side so as to be raised over the entire circumference. The inner edge section 151A has two base guide protrusions 153 extending in the peripheral direction of the attachment hole 151. The base guide protrusions 153 are equally spaced apart in the peripheral direction. Each base guide protrusion 153 includes a wide section 153A, a narrow section 153B, and a guiding protrusion 153C, which are arranged in this order from the trailing side in the rotation direction in a case of a clockwise rotation in plan view. The wide section 153A is shaped as an arc that has a width (the dimension in the radial direction) over the entire inner edge section 151A (the dimension in the radial direction) and extends in the circumferential direction. The narrow section 153B is located at the radially outer end of the inner edge section 151A and extends arcuately with a width (the dimension in the radial direction) smaller than the width of the wide section 153A. The guiding protrusion 153C has an arcuate shape that is narrower than the wide section 153A and wider than the narrow section 153B, and extends at the radially outer end of the inner edge section 151A. A trailing section of the guiding protrusion 153C in a case of a clockwise rotation of the guiding protrusion 153C in plan view is inclined such that the distance to the center line L of the attachment hole 151 decreases toward the leading side in the rotation direction. A leading section of the guiding protrusion 153C in a case of a clockwise rotation of the guiding protrusion 153C in plan view extends in the circumferential direction with a constant width (the dimension in the radial direction).

The inner edge section 151A of the component body 150 has two fitting recesses 154, which are equally spaced apart in the peripheral direction of the center tube 136. Each fitting recess 154 extends in an arcuate shape of which the center is the center line L of the attachment hole 151. Each fitting recess 154 is adjacent to the guiding protrusion 153C. Specifically, the fitting recess 154 is located on the leading side of the guiding protrusion 153C in a case of a clockwise rotation in plan view. In this manner, the guiding protrusions 153C and the fitting recesses 154 are arranged in the peripheral direction of the attachment hole 151 in the present embodiment.

When the insert nut 130 is inserted into the attachment hole 151 of the component body 150 as shown in Fig. 30, the position in the peripheral direction of the fitting protrusion 145 of each engagement arm 138 (refer to Fig. 29) is a position radially inward of the narrow section 153B of the base guide protrusion 153 of the component body 150. When the insert nut 130 is attached to the component body 150 (the state shown in Fig. 20), the position in the circumferential direction of the fitting protrusion 145 of each engagement arm 138 is a position opposed to the fitting recess 154 of the component body 150 in the fastening direction of the internal thread 131 (the vertical direction in Fig. 20). The state in which the insert nut 130 is attached to the component body 150 refers to a state in which the insert nut 130 has been rotated approximately 90 degrees after being inserted into the attachment hole 151.

The component body 150 includes an unlock marker protrusion 155 on the outer surface. The unlock marker protrusion 155 is located near the inner edge section 151A. Specifically, in a state in which the insert nut 130 has been inserted into the attachment hole 151 of the component body 150 but has not been rotated (the state shown in Fig. 30), the unlock marker protrusion 155 is located in a section in the outer surface of the insert nut 130 that is radially outward of one of the marker recesses 139. The unlock marker protrusion 155 includes a semi-circular protrusion and a protrusion having the shape of an unlocked padlock. The component body 150 also includes a lock marker protrusion 156 on the outer surface. The lock marker protrusion 156 is located near the inner edge section 151A. Specifically, in a state in which the insert nut 130 is attached to the component body 150 (the state shown in Fig. 20), the lock marker protrusion 156 is located in a section in the outer surface of the insert nut 130 that is radially outward of the one of the marker recesses 139. The lock marker protrusion 156 includes a semi-circular protrusion and a protrusion having the shape of a locked padlock.

An operation of attaching and removing the insert nut 130 to and from the component body 150 will now be described together with operational advantages of the radiator support 120 of the present embodiment.

First, an operation of attaching the insert nut 130 to the component body 150 will be described.

The attachment of the insert nut 130 to the component body 150 is performed by moving the insert nut 130 from the outer side toward the inner side with respect to the gate-shaped (cap-shaped) component body 150. Specifically, when the insert nut 130 is attached to the right wall of the component body 150, the insert nut 130 is moved leftward. When the insert nut 130 is attached to the upper wall of the component body 150, the insert nut 130 is moved downward. When the insert nut 130 is attached to the left wall of the component body 150, the insert nut 130 is moved rightward. The attachment of the insert nut 130 is performed using automatic apparatus with a robotic arm.

In this operation, the section on the outer side of the insert nut 130 is first fitted to a general-purpose hexagon socket attached to the robotic arm.

Then, as shown in Figs. 28 and 30, the insert nut 130 is moved to a position at which the engagement protrusions 152 of the component body 150 and the guide grooves 143 of the engagement recesses 135 of the insert nut 130 overlap each other in plan view. As a result, one of the marker recesses 139 of the insert nut 130 is aligned in the circumferential direction with the unlock marker protrusion 155 of the component body 150. Thereafter, as shown in Figs. 29 and 30, the insert nut 130 is pushed into the attachment hole 151 of the component body 150. This causes the engagement protrusions 152 of the component body 150 to pass the interior of the engagement recesses 135 of the insert nut 130 (specifically, the guide grooves 143), so that the insert nut 130 is moved toward the inner side. Accordingly, the insert nut 130 is inserted into the attachment hole 151 of the component body 150.

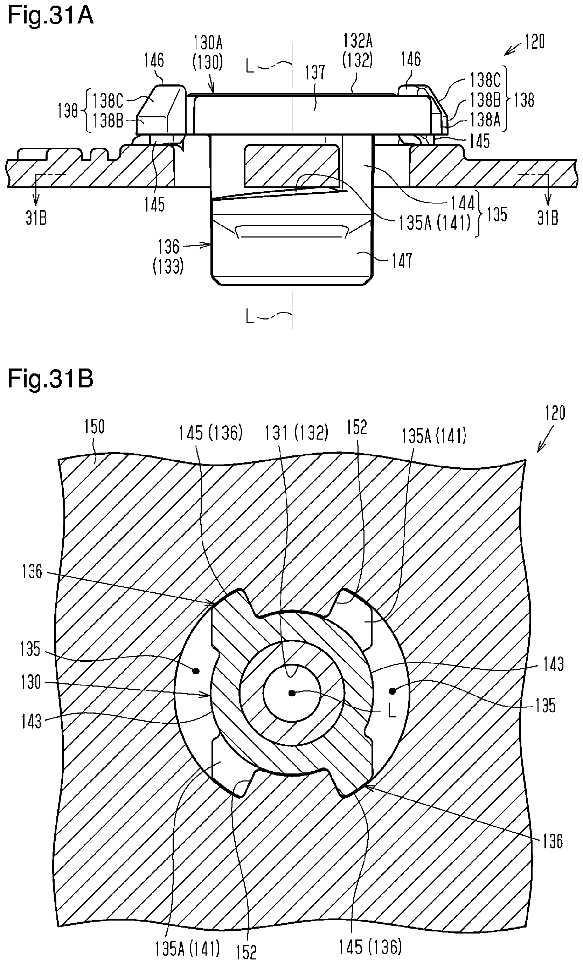

Thereafter, the insert nut 130 is rotated clockwise in plan view. At this time, the insert nut 130 is guided by engagement between the engagement recesses 135 in the outer circumferential surface (specifically, the engagement grooves 141) and the engagement protrusions 152 on the inner surface of the attachment hole 151 of the component body 150. In the present embodiment, as shown in Fig. 29, a section of the surface of each engagement recess 135 on the inner side (the contact surface 135A) extends along an imaginary spiral plane of which the spiral axis is the center line L. At this time, as in an example illustrated in Figs. 31A and 31B, a section (a contact surface 152A) of the outer surface on the inner side (the lower side in Fig. 31A) of each engagement protrusion 152 and the contact surface 135A of the corresponding engagement recess 135 are brought into contact with each other. When the insert nut 130 is rotated further, the contact pressure between the contact surfaces 152A and 135A increases. In the present embodiment, when the contact pressure reaches or exceeds a predetermined value, the rotation of the insert nut 130 (specifically, the rotation of the robotic arm) is stopped.

In the present embodiment, the insert nut 130 is secured inside the attachment hole 151 of the component body 150 by increasing the contact pressure between the contact surfaces 152A and 135A of the engagement protrusions 152 and the engagement recesses 135. Accordingly, movement in the fastening direction of the insert nut 130 relative to the component body 150 is restricted, and chattering of the insert nut 130 is limited.

In the present embodiment, although limited within the ranges of the manufacturing tolerances, the engagement protrusions 152 of the component body 150 may be made thin or the engagement recesses 135 of the insert nut 130 may be widened. In this case, the contact surface pressure between the contact surfaces 152A of the engagement protrusions 152 and the contact surfaces 135A of the engagement recesses 135 is unlikely to increase. Thus, when the insert nut 130 is rotated clockwise in plan view with the engagement protrusions 152 and the engagement recesses 135 engaged with each other, the surface pressure between the contact surfaces 152A and 135A may fail to reach or exceed the predetermined value.

In this respect, in the present embodiment, the engagement protrusions 152 of the component body 150 abut the partition wall portions 144 of the insert nut 130 when the insert nut 130 rotates a certain amount. This prevents the insert nut 130 from rotating excessively. Further, in addition to the increase in the contact pressure between the contact surfaces 152A of the engagement protrusions 152 and the contact surfaces 135A of the engagement recesses 135 (where the contact pressure < the predetermined value), the leading end in the rotation direction of each engagement protrusion 152 and the corresponding partition wall portion 144 of the insert nut 130 contact each other (abut each other). This limits chattering of the insert nut 130. Also, one of the marker recesses 139 of the insert nut 130 is aligned in the circumferential direction with the lock marker protrusion 156 of the component body 150.

In the present embodiment as described above, when the insert nut 130 is inserted into the attachment hole 151 of the component body 150 and rotated in the circumferential direction, the engagement protrusions 152 on the inner circumferential surface of the attachment hole 151 and the surfaces defining the engagement recesses 135 in the outer circumferential surface of the insert nut 130 are engaged with each other. The insert nut 130 is thus attached to the component body 150. In the present embodiment, as shown in Fig. 21, the insert nut 130 is attached to the component body 150 in a state in which the contact surfaces 152A of the engagement protrusions 152 and the contact surfaces 135A of the engagement recesses 135, which are opposed to each other in the insertion direction of the insert nut 130 (the vertical direction in Fig. 21), contact each other. Thus, the insert nut 130 is attached to the component body 150 in a manner ensuring a high strength against a force (pull-out load) that acts to pull out the insert nut 130 from the attachment hole 151 of the component body 150.

In the present embodiment, as shown in Fig. 30, before the insert nut 130 is rotated clockwise in plan view when the insert nut 130 is attached to the component body 150, the fitting protrusions 145 of the engagement arms 138 are located radially inward of the narrow sections 153B of the base guide protrusions 153 of the component body 150 shown in Fig. 25.

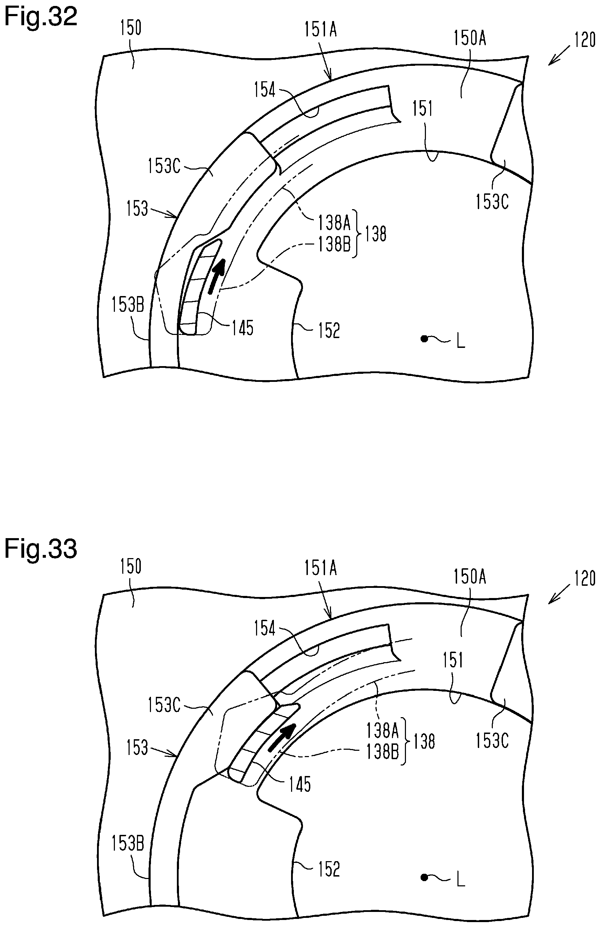

As shown in Figs. 32 and 33, when the insert nut 130 is rotated clockwise in plan view, the fitting protrusions 145 of the engagement arms 138 come into contact with the guiding protrusions 153C of the base guide protrusions 153. At this time, the fitting protrusions 145 of the engagement arms 138 are guided to approach the center line L by the radially inner surfaces of the guiding protrusions 153C of the base guide protrusions 153, so that the engagement arms 138 are deformed toward the center line L (the state shown in Fig. 33). This causes the fitting protrusions 145 of the engagement arms 138 to pass while avoiding the guiding protrusions 153C of the component body 150.

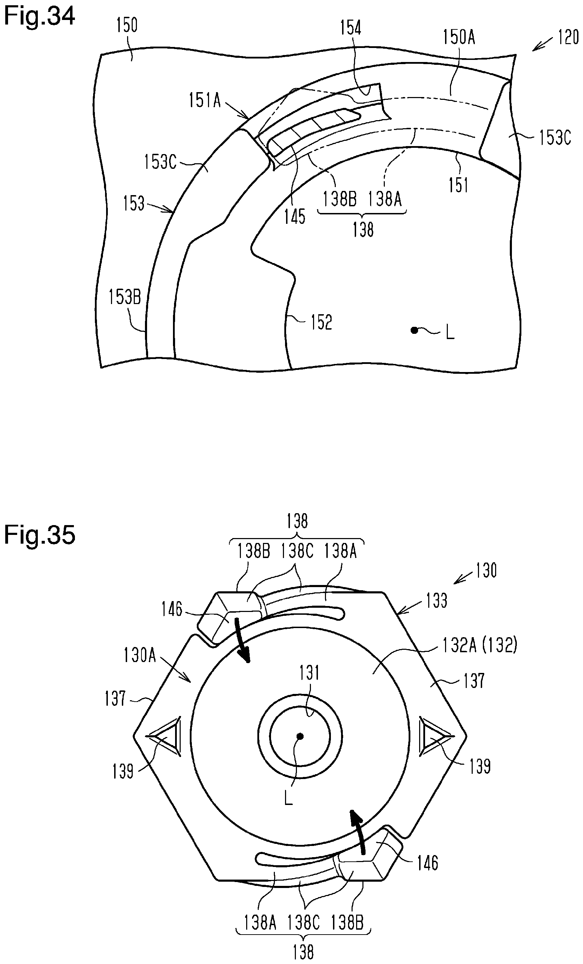

When the insert nut 130 is rotated further as shown in Fig. 34, the fitting protrusions 145 of the engagement arms 138 pass the sections of the component body 150 in which the guiding protrusions 153C are disposed. At this time, since the engagement arms 138 are restored to their original shapes, the fitting protrusion 145 of each engagement arm 138 and the corresponding guiding protrusion 153C of the component body 150 are arranged side-by-side in the peripheral direction.

Thus, once the insert nut 130 is attached to the component body 150, the fitting protrusions 145 of the engagement arms 138 and the guiding protrusions 153C of the component body 150 abut each other even if the insert nut 130 is rotated counterclockwise in plan view (in the removal direction). Since further rotation of the insert nut 130 is restricted, the insert nut 130 is prevented from being loosened.

In the present embodiment, a section of the radially inner surface of each guiding protrusion 153C is inclined such that the distance to the center line L decreases toward the leading side in the rotation direction in a case of a clockwise rotation of the insert nut 130 in plan view. It therefore simply requires rotation of the insert nut 130 relative to the component body 150 to cause the fitting protrusions 145 to pass the guiding protrusions 153C, thereby arranging each guiding protrusion 153C and the corresponding fitting protrusion 145 side-by-side in the peripheral direction.

Next, an operation of removing the insert nut 130 from the component body 150 will be described.

When removing the insert nut 130 from the component body 150, a hexagon socket is fitted to a section on the outer side (a section including the second fixation surface 130A) of the insert nut 130.

In a state in which the engagement arms 138 are not elastically deformed as shown in Fig. 22, the outer shape of the section on the outer side of the insert nut 130 does not fit in the hexagon nut. In this state, the fitting protrusion 145 of each engagement arm 138 and the corresponding guiding protrusion 153C of the component body 150 are arranged side-by-side in the peripheral direction as shown in Figs. 20 and 34. Therefore, the abutment of the fitting protrusion 145 and the guiding protrusion 153C restricts rotation in the removal direction of the insert nut 130.

However, even in a state in which the engagement arms 138 are not elastically deformed as shown in Figs. 20 and 22, the outer shape of the end on the outer side of the insert nut 130 is substantially hexagonal and thus can be partially fitted in the hexagon socket. Each engagement arm 138 includes the inclined surface 138C in a section that forms the outer circumferential surface of the insert nut 130, and the engagement arm 138 can be elastically deformed to swing toward and away from the center line L. Therefore, when the hexagon socket is pushed onto the insert nut 130 from the outer side, the inclined surfaces 138C of the engagement arms 138 are pushed by the inner surface of the hexagon socket. This elastically deforms the engagement arms 138 so that the engagement arms 138 are bent toward the center line L. As a result, the section on the outer side of the insert nut 130 is fitted in the hexagon socket as shown in Fig. 35.

In the operation of removing the insert nut 130 from the component body 150, the fitting protrusions 145, which are integrated with the distal ends 138B of the engagement arms 138 (refer to Fig. 20), are shifted toward the center line L by an amount corresponding to the elastic deformation of the engagement arms 138 toward the center line L. As a result, the fitting protrusion 145 of each engagement arm 138 and the corresponding guiding protrusion 153C of the component body 150 are no longer arranged side-by-side in the peripheral direction. That is, the positions of the fitting protrusion 145 and the guiding protrusion 153C in the radial direction of the internal thread 131 are displaced from each other. Therefore, in this state, even if the insert nut 130 is rotated in the removal direction (the counterclockwise direction in plan view), the fitting protrusion 145 of each engagement arm 138 and the corresponding guiding protrusion 153C of the component body 150 do not abut each other, allowing the insert nut 130 to be rotated. As described above, in the present embodiment, the removal operation state, in which the insert nut 130 can be rotated in the removal direction, is achieved by simply elastically deforming the engagement arms 138 such that the positions of each fitting protrusion 145 and the corresponding guiding protrusion 153C are displaced from each other in the peripheral direction.

In the removal operation state, the insert nut 130 can be removed from the attachment hole 151 of the component body 150 by rotating the insert nut 130 in the removal direction together with the hexagon socket.

As described above, the state in which the insert nut 130 can be rotated in the removal direction (the state shown in Fig. 35) is achieved by fitting the section on the outer side of the insert nut 130 into the hexagon socket, while elastically deforming the engagement arms 138 such that the engagement arms 138 are bent toward the center line L. Thus, the insert nut 130 can be removed from the component body 150 by fitting the hexagon socket to the insert nut 130 and rotating the insert nut 130 without performing additional operation of disengaging the fitting protrusions 145 of the engagement arms 138 from the guiding protrusions 153C of the component body 150.

In a radiator support made of a metallic material of a first comparative example, a metal nut for fixing the frame member 121 can be directly fixed (welded) to the radiator support. Since the metal nut does not have to be removed when the radiator support is discarded, the radiator support is easy to recycle.

In a radiator support made of a synthetic resin of a second comparative example, a metal nut cannot be directly welded to the radiator support. In these radiator supports, an internal thread member (for example, a blind nut) can be fixed by swaging. These radiator supports not only need a costly tool for swaging, but also require troublesome operations when the internal thread members are removed for recycle or repair.

A nut may be arranged on the back of the radiator support of the second comparative example, which is made of a synthetic resin. The radiator support and the frame member 121 are held between the nut and a bolt, so that the radiator support and the frame member 121 are fixed to each other. The radiator support thus has a structure that withstands a high pull-out load. However, if an automatic apparatus is used to attach a nut to the radiator support, a robotic arm needs to enter a narrow space on the inner side of the radiator support. The attachment of the nut is thus difficult.

The radiator support 120 of the present embodiment allows a robotic arm of an automatic apparatus to easily attach the insert nut 130 to the radiator support 120 (the component body 150) from the outer side of the radiator support 120 such that the insert nut 130 withstands a high pull-out load. Further, since the insert nut 130 can be removed from the component body 150 by being rotated with the hexagon socket fitted to the insert nut 130 from the outer side, the radiator support 120 can be easily recycled or repaired. The present embodiment facilitates attachment and removal of the insert nut 130 to and from the component body 150 from the outer side of the insert nut 130 (the side corresponding to the first fixation surface 150A), that is, from the section (location) in which a space for fixing the member-to-be-fastened-and-fixed is secured.

With the radiator support 120 of the present embodiment, attachment and removal of the insert nut 130 can be performed by a general-purpose tool, which is readily available. Such general-purpose tools include, in addition to a hexagon socket, a dodecagon socket, a ring wrench, a wrench, and an adjustable wrench. Therefore, an operator or an automatic apparatus can perform attachment or removal of the insert nut 130 not only in a manufacturing plant, which is equipped with a dedicated attaching apparatus, but also in a maintenance workshop, where maintenance of automobiles is performed, and a dismantling facility, where automobiles are dismantled.

An operation of attaching the frame member 121 (shown in Fig. 37) to the radiator support 120 will now be described.

The frame member 121 is fixed to the radiator support 120 using the internal thread 131 of the insert nut 130 and a fastening-fixing bolt (not shown). Specifically, the bolt is threaded into the internal thread 131 of the insert nut 130 after being passed through the insertion hole of the frame member 121.

When the frame member 121 is not fixed to the radiator support 120 as shown in Fig. 36, the fitting protrusions 145 of the engagement arms 138 and the fitting recesses 154 of the component body 150 are opposed to each other in a fastening direction of the internal thread 131 (the vertical direction in Fig. 36, or the direction along the spiral axis of the internal thread 131). In this state, the fitting protrusions 145 of the engagement arms 138 are not fitted in the fitting recesses 154 of the component body 150. Also, the pushing protrusions 146 on the outer side of the engagement arms 138 protrude further toward the outer side (upward in Fig. 36) than the second fixation surface 130A of the insert nut 130. That is, the pushing protrusions 146 are sections of the engagement arms 138 that protrude further than the first fixation surface 150A of the component body 150 and the second fixation surface 130A of the insert nut 130.

Then, when the frame member 121 is fixed to the radiator support 120 as shown in Fig. 37, the surface on the inner side (lower side in Fig. 37) of the frame member 121 pushes the engagement arms 138, so that the engagement arms 138 are pushed toward the inner side. This causes the fitting protrusions 145 of the engagement arms 138 to be fitted in the fitting recesses 154 of the component body 150.

After the frame member 121 is fixed to the radiator support 120 in this manner, the fitting of the fitting protrusions 145 of the engagement arms 138 into the fitting recesses 154 of the component body 150 restricts rotation in the removal direction of the insert nut 130 relative to the component body 150. A structure is thus achieved in which the insert nut 130 is not easily removed.

In the present embodiment, the outer surface (the second fixation surface 130A, or the upper surface in Fig. 21) of the end 132A of the nut portion 132 slightly protrudes with respect to the outer surface (the upper surface in Fig. 21) of the thread main body 133 of the insert nut 130. Also, the end 132A of the nut portion 132 is exposed to the outside of the radiator support 120. Therefore, by performing fastening and fixing by the internal thread 131 of the insert nut 130 and the bolt, the surface on the inner side of the frame member 121 and the end 132A of the nut portion 132 enter a contacting state (a metal-to-metal contact state). Accordingly, a firm fixation structure is built as the structure for fixing the frame member 121 to the radiator support 120.

In the present embodiment, the internal thread 131 (Fig. 21) of the insert nut 130 is a right-handed thread, and the contact surface 135A of each engagement recess 135 of the internal thread 131 of the insert nut 130 extends along a spiral plane extending clockwise. Thus, the rotational force that acts on the insert nut 130 when the bolt is threaded to the internal thread 131 of the insert nut 130 acts in a direction rotating the insert nut 130 to increase the surface pressure between the surface on the inner side of each engagement protrusion 152 and the contact surface 135A of the corresponding engagement recess 135. The structure therefore prevents the internal thread 131 of the insert nut 130 from being loosened when the internal thread 131 and the bolt are threaded to each other.

In the present embodiment, the end 147 on the inner side (the lower side in Fig. 23) of the center tube 136 of the insert nut 130 extends to have a substantially square cross section as shown in Figs. 23 and 24. Thus, rotation of the insert nut 130 relative to the component body 150 is restricted by fitting a general-purpose tool (a wrench or an adjustable wrench) to the end 147 on the inner side of the insert nut 130. In the present embodiment, even when the bolt fitted to the internal thread 131 of the insert nut 130 is stuck to the insert nut 130 due to, for example, rust on the bolt, the bolt can be removed with a general-purpose tool fitted to the end 147 on the inner side of the insert nut 130. This allows the bolt to be rotated in the removal direction while preventing the insert nut 130 from rotating together with the bolt. Thus, the bolt can be easily removed from the insert nut 130, so that the frame member 121 can be easily removed from the radiator support 120.

As described above, the present embodiment provides the following advantages.
(1) The present embodiment facilitates attachment of the insert nut 130 to the component body 150 from the outer side, that is, from the section (location) in which the space for fixing the frame member 121 is secured.
(2) The insert nut 130 is brought into the condition in which the insert nut 130 can be rotated in the removal direction simply by elastically deforming the engagement arms 138 such that each fitting protrusion 145 and the corresponding guiding protrusion 153C are not arranged side-by-side in the peripheral direction. In this state, insert nut 130 can be removed from the component body 150 by rotating the insert nut 130 in the removal direction.
(3) After the frame member 121 is fixed to the radiator support 120, rotation in the removal direction of the insert nut 130 relative to the component body 150 is restricted by fitting of the fitting protrusion 145 of each engagement arm 138 into the corresponding fitting recess 154 of the component body 150. A structure is thus achieved in which the insert nut 130 is not easily removed.
(4) The insert nut 130 can be removed from the component body 150 by fitting the hexagon socket to the insert nut 130 and rotating the insert nut 130 without performing additional operation of disengaging the fitting protrusions 145 of the engagement arms 138 from the guiding protrusions 153C of the component body 150.
(5) When a hexagon socket is press-fitted to the insert nut 130 from the outer side, the inner surface of the hexagon socket pushes the inclined surfaces 138C of the engagement arms 138. Accordingly, the engagement arms 138 are elastically deformed until a section on the outer side of the insert nut 130 is fitted into the hexagon socket.
(6) A section of the radially inner surface of each guiding protrusion 153C is inclined such that the distance to the center line L decreases toward the leading side in the rotation direction in a case of a clockwise rotation in plan view. It therefore simply requires rotation of the insert nut 130 relative to the component body 150 to cause the fitting protrusions 145 to pass the guiding protrusions 153C, thereby arranging each guiding protrusion 153C and the corresponding fitting protrusion 145 side-by-side in the peripheral direction.
(7) By performing fastening and fixing by the internal thread 131 of the insert nut 130 and the bolt, the surface on the inner side of the frame member 121 and the end 132A of the nut portion 132 enter a contacting state (a metal-to-metal contact state). Accordingly, a firm fixation structure is built as the structure for fixing the frame member 121 to the radiator support 120.

The above illustrated embodiment may be modified as follows. The above-described embodiment and the following modifications can be combined as long as the combined modifications remain consistent with each other.

The shape of the section of the insert nut 130 that corresponds to the outer circumferential surface at the end on the outer side of the insert nut 130 is not limited to a substantially hexagonal shape, but may be any shape such as a square, a circle, or an ellipse. If the shape at the end on the outer side of the insert nut 130 includes two surfaces that are located on the opposite sides of the center line L and extend parallel with each other, the insert nut can be attached and removed using a general-purpose tool (such as a wrench and an adjustable wrench).

The engagement arms 138 may be configured in a manner not forming parts of the outer circumferential surface of the insert nut 130.

The surface on the outer side of the thread main body 133 of the insert nut 130 may be located slightly toward the outer side with respect to the surface on the outer side of the nut portion 132. The surface of the component body 150 to which the frame member 121 is fixed (the first fixation surface 150A) can be located slightly toward the outer side with respect to the surface of the insert nut 130, to which the frame member 121 is fixed (the second fixation surface 130A).

A section on the inner side of the outer surface of each engagement protrusion 152 of the component body 150 (the contact surface 152A) may be a surface that extends along an imaginary clockwise spiral plane of which the spiral axis is the center line L of the center tube 136 inserted into the attachment hole 151 of the component body 150. In this case, the contact surface 152A of the component body 150 and the contact surface 135A of the engagement recess 135 of the insert nut 130 preferably have the same shape. With this configuration, clockwise rotation in plan view of the insert nut 130 with the engagement protrusions 152 and the engagement recess 135 engaged with each other establish surface contact between the contact surfaces 152A of the engagement protrusions 152 and the contact surfaces 135A of the engagement recesses 135. Further rotation of the insert nut 130 increases the surface pressure between the contact surfaces 152A and 135A. The insert nut 130 is secured inside the attachment hole 151 of the component body 150 by increasing the surface pressure between the contact surfaces 152A and 135A of the engagement protrusions 152 and the engagement recesses 135. In this case, the high surface pressure acting on the contact surfaces 152A and 135A of the engagement protrusions 152 and the engagement recesses 135 limits chattering of the insert nut 130 in a favorable manner.

The contact surfaces 135A of the engagement recesses 135 of the insert nut 130 and the contact surfaces 152A of the engagement protrusions 152 of the component body 150 both may be flat surfaces orthogonal to the center line L. Even in this structure, the insert nut 130 can be secured to the component body 150 by determining the shapes of the engagement protrusions 152 and the engagement recesses 135 such that the contact surface pressure between the outer surface of each engagement protrusion 152 and the inner surface of the corresponding engagement recess 135 is increased to a sufficient level.

The structure for restricting movement in the fastening direction of the insert nut 130 relative to the component body 150 may be provided by engagement between engagement recesses in the inner surface of the attachment hole 151 of the component body 150 and engagement protrusions on the outer surface of the insert nut 130.

The structure for restricting movement in the fastening direction of the insert nut 130 relative to the component body 150 may be provided by threading between an external thread on the outer surface of the insert nut 130 and an internal thread on the inner surface of the attachment hole 151 of the component body 150.

A general-purpose nut other than a knurled nut may be used as the nut portion 132. Alternatively, a dedicated part that has been uniquely designed may be employed.

The insert nut 130 does not necessarily need to be manufactured by insert molding. Instead, an insert nut may be manufactured by preparing the thread main body 133 and the nut portion 132 separately, and fixing the nut portion 132 to the thread main body 133, for example, by bonding.

The resin component of the above-described embodiment is not limited to the radiator support 120 made of a synthetic resin, to which the insert nut 130 is attached, but may be any resin component to which an internal thread member having an internal thread is attached.

## Claims

1. A resin component, comprising:
an internal thread member configured to be used to fasten and fix a member-to-be-fastened-and-fixed made of a metallic material; and
a component body made of a synthetic resin, the internal thread member being attached to the component body, wherein
the internal thread member includes:
a thread main body made of a synthetic resin, and
a nut portion made of a metallic material,
the nut portion includes an internal thread,
the nut portion is integrated with the thread main body in a state in which an end face of the nut portion on one side in a fastening direction of the internal thread is exposed, and
the end face of the nut portion is exposed to an outside in a state in which a protruding amount of the end face of the nut portion from an outer surface of the component body is greater than or equal to zero.

2. The resin component according to claim 1, wherein
the component body includes:
an attachment hole into which the internal thread member is inserted, and
an engagement protrusion, which protrudes from an inner circumferential surface of the attachment hole,
the internal thread member includes a groove-shaped engagement recess, which is provided in an outer circumferential surface of the internal thread member and extends in a circumferential direction, and
the internal thread member is secured to the component body through engagement between the engagement protrusion and the engagement recess.

3. The resin component according to claim 2, wherein contact surfaces of the engagement protrusion and the engagement recess extend along an imaginary spiral plane of which a spiral axis is a straight line that extends in a depth direction of the attachment hole.

4. The resin component according to claim 2 or 3, wherein one end in the circumferential direction of the engagement recess is a wall portion that closes the engagement recess.

5. The resin component according to any one of claims 2 to 4, wherein
the resin component has a structure in which a relative rotation in the circumferential direction between the internal thread member and the component body is allowed in a state in which the internal thread member is inserted into the attachment hole, and
the resin component includes a ratchet mechanism, which allows the relative rotation toward one side in the circumferential direction and restricts the relative rotation toward an other side.

6. The resin component according to claim 5, wherein
the ratchet mechanism includes:
a rachet arm, which is integrated with the thread main body, the rachet arm being configured to be elastically deformed in the fastening direction, and
a rachet recess provided in the component body, and
at least a section of an outer surface of the rachet arm extends in a same plane as the outer surface of the component body.

7. The resin component according to any one of claims 1 to 6, wherein
the component body includes an attachment hole into which the internal thread member is inserted, and
in a periphery of the attachment hole of the component body, an end on a leading side in a direction in which the internal thread member inserted has a tubular shape that extends along the outer surface of the internal thread member.

8. The resin component according to any one of claims 1 to 7, wherein
the internal thread is used to fix the member-to-be-fastened-and-fixed,
the component body includes an attachment hole into which the internal thread member is inserted,
an engagement groove is provided in one of an inner circumferential surface of the attachment hole and an outer circumferential surface of the internal thread member,
an engagement protrusion is provided on the other one of the inner circumferential surface of the attachment hole and the outer circumferential surface of the internal thread member,
the engagement groove extends in a peripheral direction of the internal thread member, the engagement groove and the engagement protrusion are engaged with each other, the component body includes a first fixation surface on a side on which the member-to-be-fastened-and-fixed is fixed,
the first fixation surface includes a guiding protrusion and a fitting recess,
the internal thread member includes an engagement arm having a cantilever-like structure,
the engagement arm extends in the peripheral direction,
the engagement arm is configured to be elastically deformed such that a free end of the engagement arm swings,
the engagement arm includes a fitting protrusion,
the fitting protrusion is provided on a surface facing the component body in a section of the engagement arm that corresponds to the free end,
the guiding protrusion of the component body and the fitting protrusion of the engagement arm are arranged side-by-side in the peripheral direction,
the fitting protrusion of the engagement arm and the fitting recess of the component body are opposed to each other in the fastening direction of the internal thread,
the internal thread member includes a second fixation surface on a side on which the member-to-be-fastened-and-fixed is fixed, and
a section of the engagement arm protrudes further than the first fixation surface and the second fixation surface.

9. The resin component according to claim 8, wherein
the engagement arm includes a part of an outer circumferential surface in a section of the internal thread member corresponding to the second fixation surface,
the section of the internal thread member corresponding to the second fixation surface has a shape configured to be fitted in a hexagon socket,
when the guiding protrusion and the fitting protrusion are arranged side-by-side in the peripheral direction, a part of the engagement arm is not fitted in the hexagon socket, and
when the engagement arm is elastically deformed such that the engagement arm is fitted in the hexagon socket, the guiding protrusion and the fitting protrusion are not arranged side-by-side in the peripheral direction.

10. The resin component according to claim 9, wherein
a section of the engagement arm that includes a part of the outer circumferential surface of the internal thread member includes an inclined surface, and
the inclined surface is inclined such that the inclined surface is progressively shifted radially outward as a distance from the second fixation surface increases.

11. The resin component according to any one of claims 8 to 10, wherein
the resin component has a structure in which a relative rotation of the internal thread member in relation to the component body allows the internal thread member to be attached to the component body,
the guiding protrusion extends in the peripheral direction, and
an outer surface of the guiding protrusion closer to a center of the relative rotation has a shape that becomes closer to the center as a distance to a leading side in a rotation direction of the relative rotation decreases.

12. A resin component, comprising:
an internal thread member including an internal thread used to fix a member-to-be-fastened-and-fixed; and
a component body made of a synthetic resin, the component body having an attachment hole into which the internal thread member is inserted, wherein
an engagement groove is provided in one of an inner circumferential surface of the attachment hole and an outer circumferential surface of the internal thread member,
an engagement protrusion is provided on the other one of the inner circumferential surface of the attachment hole and the outer circumferential surface of the internal thread member,
the engagement groove extends in a peripheral direction of the internal thread member,
the engagement groove and the engagement protrusion are engaged with each other,
the component body includes a first fixation surface on a side on which the member-to-be-fastened-and-fixed is fixed,
the first fixation surface includes a guiding protrusion and a fitting recess,
the internal thread member includes an engagement arm having a cantilever-like structure,
the engagement arm extends in the peripheral direction,
the engagement arm is configured to be elastically deformed such that a free end of the engagement arm swings,
the engagement arm includes a fitting protrusion,
the fitting protrusion is provided on a surface facing the component body in a section of the engagement arm that corresponds to the free end,
the guiding protrusion of the component body and the fitting protrusion of the engagement arm are arranged side-by-side in the peripheral direction,
the fitting protrusion of the engagement arm and the fitting recess of the component body are opposed to each other in the fastening direction of the internal thread,
the internal thread member includes a second fixation surface on a side on which the member-to-be-fastened-and-fixed is fixed, and
a section of the engagement arm protrudes further than the first fixation surface and the second fixation surface.

13. The resin component according to claim 12, wherein
the internal thread member includes:
a thread main body made of a synthetic resin, and
a nut portion made of a metallic material,
the nut portion includes the internal thread,
the nut portion is integrated with the thread main body in a state in which an end face of the nut portion on one side in a fastening direction of the internal thread is exposed, and
the end face of the nut portion is exposed to an outside in a state in which a protruding amount of the end face of the nut portion from the first fixation surface of the component body is greater than or equal to zero.
